# EUROPEAN PATENT APPLICATION

(11) **EP 4 811 875 A1**
(43) Date of publication of application: **23.09.2026**
(21) Application number: 24899812.2
(22) Date of filing: 03.12.2024
(51) Int. Cl.: H04W 52/02

(54) **COMMUNICATION METHOD AND APPARATUS**

(30) Priority: 05.12.2023 CN 202311665318
(71) Applicant: Huawei Technologies Co., Ltd., Shenzhen, Guangdong 518129 (CN)
(72) Inventor: GAN, Ming, Shenzhen, Guangdong 518129 (CN); ZHAO, Yue, Shenzhen, Guangdong 518129 (CN); LI, Yunbo, Shenzhen, Guangdong 518129 (CN); MENG, Meng, Shenzhen, Guangdong 518129 (CN); ZHOU, Ming, Shenzhen, Guangdong 518129 (CN)
(74) Representative: Grünecker Patent- und Rechtsanwälte PartG mbB
(86) International application number: PCT/CN2024/136451
(87) International publication number: WO 2025/119174

(57) **Abstract**

This application discloses a communication method and apparatus, and supports IEEE protocols (for example, the IEEE 802.11be/Wi-Fi 7/EHT protocol, the IEEE 802.11bn/UHR/Wi-Fi 8 protocol, the IEEE 802.15/UWB protocol, or the IEEE 802.11bf/sensing/sensing protocol). The method includes: a station receives a first radio frame from an access point in a first mode, where the first radio frame is used to trigger the station to transition a mode, and the first radio frame includes identification information of the station; the station transitions from the first mode to a second mode after receiving the first radio frame; and the station receives a message frame from the access point in the second mode. Power consumption of the station in the first mode is lower than power consumption of the station in the second mode. This solution can ensure that the station is triggered, by only a Wi-Fi signal sent to the station, to transition a mode, thereby reducing power consumption of the station.

## Description

### CROSS-REFERENCE TO RELATED APPLICATIONS

This application claims priority to Chinese Patent Application No. 202311665318.7, filed with the China National Intellectual Property Administration on December 5, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a wireless fidelity (Wireless Fidelity, Wi-Fi) network, a large part of energy of a device is wasted on idle listening (idle listening) when no signal is received. For example, according to a result of testing a commercial Wi-Fi 6 chip, power consumption of a device in a doze state accounts for 1.64%, power consumption of the device in a transmit state accounts for 8.84%, power consumption of the device in a receive state accounts for 27.08%, and power consumption of the device in a listening state accounts for 62.43%. The reason for this is as follows: Instantaneous power of the device during transmission and reception is relatively high, and instantaneous power of the device during listening is slightly lower than the instantaneous power of the device during transmission and reception. However, listening time of the device is far longer than transmit and receive time of the device, and consequently a proportion of power consumed by listening in total power is relatively large.

In a technical solution, a low power transceiver (Low power transceiver) is added to reduce power consumption in a listening mode, that is, a device includes two transceivers: the low power transceiver and a regular transceiver (Regular Transceiver). When the device is in the listening mode, only the low power transceiver performs listening. If the low power transceiver synchronizes with a Wi-Fi signal by using a short training field (Short Training Field, STF), the regular transceiver is woken up. If a signal received by the low power transceiver is not a Wi-Fi signal, the received signal is filtered out.

However, in a scenario in which devices are densely deployed, an air interface has a Wi-Fi signal of a device, and also has a large quantity of Wi-Fi signals of other devices. As a result, a regular transceiver of the device is frequently woken up by Wi-Fi signals of other devices, causing a waste of power consumption of the device.

### SUMMARY

This application provides a communication method and apparatus, to reduce device power consumption of a station.

According to a first aspect, a communication method is provided. The method may be performed by a station. Unless otherwise specified, the "station" in this application may be the station, or may be a communication module in the station or a circuit or a chip (for example, a modem (Modem) chip, also referred to as a baseband (baseband) chip, or a system on chip (System on Chip, SoC) chip or a system in package (System in Package) SIP chip including a modem core) responsible for a communication function in the station. The method includes: the station receives a first radio frame from an access point in a first mode, where the first radio frame is used to trigger the station to transition a mode, and the first radio frame includes identification information of the station; the station transitions from the first mode to a second mode after receiving the first radio frame; and the station receives a message frame from the access point in the second mode. Power consumption of the station in the first mode is lower than power consumption of the station in the second mode.

In the foregoing solution, the first radio frame received by the station from the access point carries the identification information of the station, so that the station can perform mode transition when receiving a radio frame sent to the station (transition from the first mode to the second mode after receiving the first radio frame). This can ensure that the station is triggered, by only a Wi-Fi signal sent to the station, to transition a mode, thereby reducing device power consumption of the station.

In a possible design, the first mode is that the station transmits a signal through a low power transceiver; and the second mode is that the station transmits a signal through a regular transceiver. When the station transmits a signal through the low power transceiver, the low power transceiver of the station is in an awake state, and the regular transceiver of the station is in a doze state. When the station transmits a signal through the regular transceiver, the regular transceiver of the station is in an awake state, and the low power transceiver of the station is in an awake state or a doze state.

This can ensure that the regular transceiver of the station is woken up by only a Wi-Fi signal sent to the station, thereby reducing device power consumption of the station.

In a possible design, the first radio frame meets one or more of the following:
a bandwidth corresponding to the first radio frame is less than a first threshold;
a modulation and coding scheme (modulation and coding scheme, MCS) order corresponding to the first radio frame is less than a second threshold; and
a number of streams corresponding to the first radio frame is less than a third threshold.

This can ensure that the first radio frame can be received by the station in the first mode, thereby improving reliability of the solution.

In a possible design, the first radio frame further meets one or more of the following:
a frame type of the first radio frame is a first type; and
a format of a physical-layer protocol data unit (physical-layer protocol data unit, PPDU) in which the first radio frame is located is a first format.

This can ensure that the first radio frame or the PPDU in which the first radio frame is located can be received by the station in the first mode, thereby improving reliability of the solution.

In a possible design, the first radio frame is a predefined frame.

In a possible design, the station may send a second radio frame to the access point in the second mode. The second radio frame is used to notify the access point that the station has transitioned to the second mode or that the station is ready to receive a message frame from the access point.

In this way, the access point may send a message frame after the station completes mode transition, to ensure that the station can receive the message frame in the second mode.

In a possible design, the second radio frame may be a power-saving poll (power-saving poll, PS-Poll) frame. This implementation is simple and reliable.

In a possible design, the second radio frame is an acknowledgment (ACK) frame corresponding to the first radio frame. A system resource can be saved in this implementation.

In a possible design, when the second radio frame is the ACK frame corresponding to the first radio frame, a length of a padding field in the first radio frame reaches or exceeds a first length.

In this way, the station can have sufficient time to transition a mode (or wake up the regular transceiver), thereby improving reliability of mode transition.

In a possible design, the station sends a third radio frame to the access point in the first mode. The third radio frame is used to notify the access point that the station has transitioned to the second mode or that the station is ready to receive a message frame from the access point.

In this way, the station may send the third radio frame to the access point immediately after receiving the first radio frame. There is a clear division of labor between the first mode and the second mode (the second mode is responsible for a related procedure of exchanging a message frame, and the first mode is responsible for a related procedure of listening for the first radio frame). The logic is simple and easy to implement.

In a possible design, a length of a padding field in the first radio frame reaches or exceeds a second length.

In this way, the station can have sufficient time to transition a mode (or wake up the regular transceiver), thereby improving reliability of mode transition.

In a possible design, the first radio frame includes first indication information, and the first indication information indicates the station to transition a mode.

In this way, the station may perform mode transition according to the first indication information.

In a possible design, the first radio frame is a message frame.

In this way, the station may further receive the message frame based on the first mode, thereby improving flexibility of data transmission.

In a possible design, before the station receives the first radio frame from the access point in the first mode, the station may further receive at least one message frame from the access point in the first mode.

In this way, the station may further receive the message frame based on the first mode, thereby improving flexibility of data transmission.

In a possible design, each of the at least one message frame meets one or more of the following conditions:
a bandwidth corresponding to each message frame is less than 20 MHz;
a format of a PPDU in which each message frame is located is a non-high throughput (non-high throughput, non-HT) PPDU;
an MCS order corresponding to each message frame is less than a threshold; and
the number of streams corresponding to each message frame is a single stream.

In a possible design, before the station receives the first radio frame from the access point in the first mode, the station may further send a fourth radio frame to the access point in a third mode. The fourth radio frame is used to request entry into a transition procedure from the access point or notify the access point of entry into a transition procedure, and the transition procedure includes transitioning from the first mode to the second mode or transitioning from the second mode to the first mode. The third mode is that the station can transmit a signal through only the regular transceiver.

In this way, the station may enter a transition procedure when the station needs to enter the transition procedure.

In a possible design, the station may further receive a fifth radio frame from the access point in the third mode. The fifth radio frame is used to notify the station that the access point consents to entry into the transition procedure or that the access point receives the fourth radio frame.

In this way, the station may enter a transition procedure when the access point consents to entry into the transition procedure.

In a possible design, the fourth radio frame includes a field indicating a need for entry into the transition procedure.

In a possible design, the fourth radio frame further includes at least one of the following fields:
a field indicating the length of the padding field in the first radio frame;
a field indicating time required for the station to transition from the regular transceiver to the low power transceiver;
a field indicating a receiving capability upper limit of the low power transceiver of the station; and
a field indicating a receiving capability upper limit of the regular transceiver of the station.

In this way, before entry into the transition procedure, a related parameter in the transition procedure may be negotiated, thereby improving reliability of the solution.

In a possible design, the fifth radio frame includes a field indicating consent to entry into the transition procedure.

In a possible design, the fifth radio frame further includes at least one of the following fields:
a field indicating the length of the padding field in the first radio frame;
a field indicating the time required for the station to transition from the regular transceiver to the low power transceiver;
a field indicating the receiving capability upper limit of the low power transceiver of the station; and
a field indicating the receiving capability upper limit of the regular transceiver of the station.

In this way, before entry into the transition procedure, a related parameter in the transition procedure may be negotiated, thereby improving reliability of the solution.

In a possible design, the station may further send a sixth radio frame to the access point. The sixth radio frame is used to request teardown of the transition procedure from the access point or notify the access point of teardown of the transition procedure.

In this way, the station can tear down the transition procedure, thereby improving flexibility of the solution.

According to a second aspect, a communication method is provided. The method may be performed by an access point. Unless otherwise specified, the "access point" in this application may be the access point, or may be a communication module in the access point or a circuit or a chip (for example, a modem (Modem) chip, also referred to as a baseband (baseband) chip, or a system on chip (System on Chip, SoC) chip or a system in package (System in Package) SIP chip including a modem core) responsible for a communication function in the access point. The method includes: the access point sends a first radio frame to a station, where the first radio frame is used to trigger the station to transition a mode, and the first radio frame includes identification information of the station; and the access point sends a message frame to the station.

In a possible design, the transitioning a mode includes transitioning from a first mode to a second mode or transitioning from the second mode to the first mode; the first mode is that the station transmits a signal through a low power transceiver; and the second mode is that the station transmits a signal through a regular transceiver.

In a possible design, the first radio frame meets one or more of the following:
a bandwidth corresponding to the first radio frame is less than a first threshold;
an MCS order corresponding to the first radio frame is less than a second threshold; and
a number of streams corresponding to the first radio frame is less than a third threshold.

In a possible design, the first radio frame further meets one or more of the following:
a frame type of the first radio frame is a first type; and
a format of a PPDU in which the first radio frame is located is a first format.

In a possible design, the first radio frame is a predefined frame.

In a possible design, the access point further receives a second radio frame from the station; and the access point determines, based on the second radio frame, that the station has transitioned to the second mode or to send a message frame to the station.

In a possible design, the second radio frame is a PS-Poll frame.

In a possible design, the access point may further send one or more first radio frames to the station.

In this way, a probability that the station successfully receives the first radio frame can be increased.

In a possible design, the second radio frame is an ACK frame corresponding to the first radio frame.

In a possible design, a length of a padding field in the first radio frame reaches or exceeds a first length.

In a possible design, the access point may further receive a third radio frame from the station; and the access point determines, based on the third radio frame, that the station has transitioned to the second mode or to send a message frame to the station.

In a possible design, a length of a padding field in the first radio frame reaches or exceeds a second length.

In a possible design, the first radio frame includes first indication information, and the first indication information indicates the station to transition a mode.

In a possible design, the first radio frame is a message frame.

In a possible design, before the access point sends the first radio frame to the station, the access point may further send at least one message frame to the station.

In a possible design, each of the at least one message frame meets one or more of the following conditions:
a bandwidth corresponding to each message frame is less than 20 MHz;
a format of a PPDU in which each message frame is located is a Non-HT PPDU;
an MCS order corresponding to each message frame is less than a threshold; and
the number of streams corresponding to each message frame is a single stream.

In a possible design, before the access point sends the first radio frame to the station, the access point may further receive a fourth radio frame from the station. The fourth radio frame is used to request entry into a transition procedure from the access point or notify the access point of entry into a transition procedure, and the transition procedure includes transitioning from the first mode to the second mode or transitioning from the second mode to the first mode.

In a possible design, the access point may further send a fifth radio frame to the station. The fifth radio frame is used to notify the station that the access point consents to entry into the transition procedure or that the access point receives the fourth radio frame.

In a possible design, the fourth radio frame includes a field indicating a need for entry into the transition procedure.

In a possible design, the fourth radio frame further includes at least one of the following fields:
a field indicating the length of the padding field in the first radio frame;
a field indicating time required for the station to transition from the regular transceiver to the low power transceiver;
a field indicating a receiving capability upper limit of the low power transceiver of the station; and
a field indicating a receiving capability upper limit of the regular transceiver of the station.

In a possible design, the fifth radio frame includes a field indicating consent to entry into the transition procedure.

In a possible design, the fifth radio frame further includes at least one of the following fields:
a field indicating the length of the padding field in the first radio frame;
a field indicating the time required for the station to transition from the regular transceiver to the low power transceiver;
a field indicating the receiving capability upper limit of the low power transceiver of the station; and
a field indicating the receiving capability upper limit of the regular transceiver of the station.

In a possible design, the access point may further receive a sixth radio frame sent by the station. The sixth radio frame is used to request teardown of the transition procedure from the access point or notify the access point of teardown of the transition procedure.

According to a third aspect, a communication method is provided. The method may be performed by a station. Unless otherwise specified, the "station" in this application may be the station, may be a component (for example, a processor, a chip, or a chip system) in the station, or may be a logical module or software that can implement all or some functions of the station. The method includes: the station receives a first radio frame from an access point through a low power transceiver, where the first radio frame is used to trigger the station to wake up a regular transceiver, and the first radio frame includes identification information of the station; the station wakes up the regular transceiver after receiving the first radio frame; and the station receives a message frame from the access point through the woken-up regular transceiver.

According to a fourth aspect, a communication method is provided. The method may be performed by an access point. Unless otherwise specified, the "access point" in this application may be the access point, may be a component (for example, a processor, a chip, or a chip system) in the access point, or may be a logical module or software that can implement all or some functions of the access point. The method includes: the access point sends a first radio frame to a station, where the first radio frame is used to trigger to wake up a regular transceiver, and the first radio frame includes identification information of the station; and the access point sends a message frame to the station.

According to a fifth aspect, a communication apparatus is provided. The apparatus includes a module, a unit, or a technical means configured to perform the method according to any one of the first aspect or possible designs of the first aspect.

For example, the apparatus may include:
a transceiver module, configured to receive a first radio frame from an access point in a first mode, where the first radio frame is used to trigger a station in which the apparatus is located to transition a mode, and the first radio frame includes identification information of the station; and
a processing module, configured to transition from the first mode to a second mode after the transceiver module receives the first radio frame.

The transceiver module is further configured to receive a message frame from the access point in the second mode. Power consumption of the station in the first mode is lower than power consumption of the station in the second mode.

According to a sixth aspect, a communication apparatus is provided. The apparatus includes a module, a unit, or a technical means configured to perform the method according to any one of the second aspect or possible designs of the second aspect.

For example, the apparatus may include:
a transceiver module, configured to: send a first radio frame to a station, where the first radio frame is used to trigger the station to transition a mode, and the first radio frame includes identification information of the station; and send a message frame to the station.

According to a seventh aspect, a communication apparatus is provided. The apparatus includes a module, a unit, or a technical means configured to perform the method according to any one of the third aspect or possible designs of the third aspect.

For example, the apparatus may include:
a transceiver module, configured to receive a first radio frame from an access point through a low power transceiver, where the first radio frame is used to trigger a station in which the apparatus is located to wake up a regular transceiver, and the first radio frame includes identification information of the station; and
a processing module, configured to wake up the regular transceiver after the transceiver module receives the first radio frame.

The transceiver module is further configured to receive a message frame from the access point through the woken-up regular transceiver.

According to an eighth aspect, a communication apparatus is provided. The apparatus includes a module, a unit, or a technical means configured to perform the method according to any one of the fourth aspect or possible designs of the fourth aspect.

For example, the apparatus may include:
a transceiver module, configured to: send a first radio frame to a station, where the first radio frame is used to trigger to wake up a regular transceiver, and the first radio frame includes identification information of the station; and send a message frame to the station.

According to a ninth aspect, a communication apparatus is provided. The apparatus includes a processor and an interface circuit. The interface circuit is electrically coupled to the processor. The processor performs the method according to any one of the first aspect or possible designs of the first aspect, the method according to any one of the second aspect or possible designs of the second aspect, the method according to the third aspect, or the method according to the fourth aspect by using a logic circuit or by executing code instructions.

According to a tenth aspect, a computer-readable storage medium is provided. The storage medium stores a computer program or instructions. When the computer program is or the instructions are run, the method according to any one of the first aspect or possible designs of the first aspect, the method according to any one of the second aspect or possible designs of the second aspect, the method according to the third aspect, or the method according to the fourth aspect is performed.

According to an eleventh aspect, a computer program product is provided, including instructions. When the instructions are run on a computer, the method according to any one of the first aspect or possible designs of the first aspect, the method according to any one of the second aspect or possible designs of the second aspect, the method according to the third aspect, or the method according to the fourth aspect is performed.

According to a twelfth aspect, a communication system is provided, including an access point and a station.

The station is configured to perform the method according to any one of the first aspect or possible designs of the first aspect, and the access point is configured to perform the method according to any one of the second aspect or possible designs of the second aspect; or the station is configured to perform the method according to any one of the third aspect or possible designs of the third aspect, and the access point is configured to perform the method according to any one of the fourth aspect or possible designs of the fourth aspect.

For specific designs and beneficial effects of the second aspect to the twelfth aspect, refer to corresponding designs and beneficial effects of the first aspect and the second aspect.

### BRIEF DESCRIPTION OF DRAWINGS

FIG. 1A is a diagram of an architecture of a possible communication system to which embodiments of this application are applicable;
FIG. 1B is a diagram of an architecture of a possible communication system to which embodiments of this application are applicable;
FIG. 2A and FIG. 2B each are a diagram of a structure of a STA to which embodiments of this application are applicable;
FIG. 3 is a flowchart of a communication method according to an embodiment of this application;
FIG. 4A and FIG. 4B are diagrams of several possible frame exchange procedures according to embodiments of this application;
FIG. 5A to FIG. 5F are diagrams of several possible frame exchange procedures according to embodiments of this application;
FIG. 6A to FIG. 6C are diagrams of several possible frame exchange procedures according to embodiments of this application;
FIG. 7A to FIG. 7E are diagrams of several possible frame exchange procedures according to embodiments of this application;
FIG. 8A to FIG. 8D are diagrams of several possible frame exchange procedures according to embodiments of this application;
FIG. 9 is a diagram of a communication apparatus according to an embodiment of this application; and
FIG. 10 is a diagram of another communication apparatus according to an embodiment of this application.

### DESCRIPTION OF EMBODIMENTS

Embodiments of this application may be applied to various communication systems. For example, embodiments of this application may be applied to a wireless local area network (wireless local area network, WLAN) system. For example, embodiments of this application may be applied to an institute of electrical and electronics engineers (institute of electrical and electronics engineers, IEEE) 802.11 system standard, for example, the 802.11a/b/g standard, the 802.11n standard, the 802.11ac standard, the 802.11ax standard, or a next generation thereof, such as the 802.11be standard, wireless fidelity (wireless fidelity, Wi-Fi) 7, or extremely high throughput (extremely high throughput, EHT); or next-generation Wi-Fi protocols (such as Wi-Fi 8, ultra high reliability (ultra high reliability, UHR), or 11bn) of 802.11be, Wi-Fi artificial intelligence (artificial intelligence, AI), or millimeter wave (millimeter wave, mmWave). This application may be further applied to a wireless personal area network system based on an ultra bandwidth (ultra bandwidth, UWB), or a sensing (sensing) system. Embodiments of this application may be further applied to a wireless local area network system, such as an internet of things (internet of things, IoT) network, vehicle to everything (vehicle to X, V2X), or point to point (point to point, P2P). Certainly, embodiments of this application may be further applied to other possible communication systems, such as a long term evolution (long term evolution, LTE) system, a universal mobile telecommunication system (universal mobile telecommunication system, UMTS), a 5th generation (5th generation, 5G) communication system, and a future 6th generation (6th generation, 6G) communication system.

Although embodiments of this application are mainly described by using a WLAN network, especially a network to which an IEEE 802.11 system standard is applied, as an example, a person skilled in the art easily understands that various aspects of this application can be extended to other networks that use various standards or protocols, for example, Bluetooth (BLUETOOTH), a high performance radio local area network (high performance radio local area network, HIPERLAN) (a wireless standard similar to the IEEE 802.11 standard and mainly used in Europe), a wide area network (wide area network, WAN), a personal area network (personal area network, PAN), or another current known or later developed network. Therefore, regardless of used coverage and a used wireless access protocol, various aspects provided in this application may be applied to any appropriate wireless network.

The foregoing communication systems to which this application is applicable are merely examples for description, and the communication systems to which this application is applicable are not limited thereto. This is uniformly described herein, and details are not described below again.

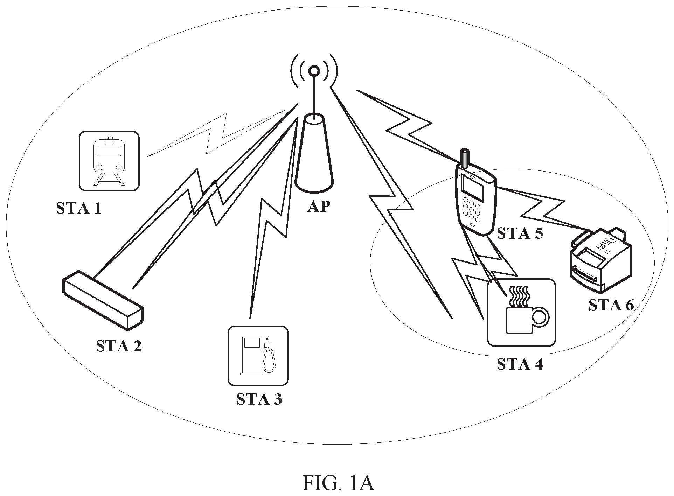

FIG. 1A shows an architecture of a possible communication system to which embodiments of this application are applicable. The architecture of the communication system includes an access point (access point, AP) and a non-access point station (non-access point station, non-AP STA, which may be referred to as a STA for short, for example, a STA 1 to a STA 6 in the figure).

It may be understood that, in FIG. 1A, a communication direction from the AP to the non-AP STA may be referred to as downlink, and a communication direction from the non-AP STA to the AP may be referred to as uplink. When the STA does not need to send an uplink signal, the STA needs to perform listening to determine whether the AP has sent a downlink signal to the STA. If the AP has sent a downlink signal to the STA, the STA receives the downlink signal.

The AP may be an access point used by a terminal device (such as a mobile phone) to access a wired (or wireless) network, and is mainly deployed in a home, a building, or a campus. A typical coverage radius is tens of meters to hundreds of meters. Certainly, the AP may be alternatively deployed outdoors. The access point is equivalent to a bridge that connects a wired network and a wireless network. A main function of the access point is to connect various wireless network clients together and then connect the wireless network to a DS. Specifically, the access point may be a terminal device (such as a mobile phone) or a network device (such as a router) with a Wi-Fi chip. The access point may be a device that supports the 802.11be standard. The access point may be alternatively a device that supports a plurality of wireless local area network (wireless local area networks, WLAN) standards of the 802.11 family, such as 802.11ax, 802.11ac, 802.11n, 802.11g, 802.11b, 802.11a, 802.11be, Wi-Fi 7, Wi-Fi 8, or a next generation thereof. The access point in this application may be a high efficient (high efficient, HE) AP or an extremely high throughput (extremely high throughput, EHT) AP, or may be an access point applicable to a future-generation Wi-Fi standard.

The AP may directly communicate with the STA. The AP may be a STA station that establishes a tunneled direct link setup (tunneled direct link setup, TDLS) or another point-to-point (Point-to-point, P2P) link with the STA, or another station that can directly communicate with the STA.

The STA may be a wireless communication chip, a wireless sensor, a wireless communication terminal, or the like, and may be alternatively referred to as a user. For example, the STA may be a mobile phone that supports a Wi-Fi communication function, a tablet computer that supports a Wi-Fi communication function, a set top box that supports a Wi-Fi communication function, a smart television that supports a Wi-Fi communication function, a smart wearable device that supports a Wi-Fi communication function, a vehicle-mounted communication device that supports a Wi-Fi communication function, or a computer that supports a Wi-Fi communication function. Optionally, the STA may support the 802.11be standard. The STA may also support a plurality of wireless local area network (wireless local area networks, WLAN) standards of the 802.11 family, such as 802.11ax, 802.11ac, 802.11n, 802.11g, 802.11b, 802.11a, 802.11be, Wi-Fi 7, Wi-Fi 8, or a next generation thereof.

The STA in embodiments of this application may be a high efficient (high efficient, HE) STA or an extremely high throughput (extremely high throughput, EHT) STA, or may be a STA applicable to a future-generation Wi-Fi standard.

For example, the AP and the STA each may be a sensor node (for example, a smart water meter, a smart electricity meter, or a smart air detection node) in a smart city, a smart device (for example, a smart camera, projector, display, television, stereo, refrigerator, or washing machine) in a smart home, a node in the internet of things (internet of things, IoT), an entertainment terminal (for example, an AR or VR wearable device), a smart device (for example, a printer or a projector) in a smart office, a vehicle-to-everything device in vehicle to everything, or some infrastructures (for example, a vending machine, a self-service navigation station of a supermarket, a self-service cash register device, and a self-service ordering machine) in daily life scenarios.

In some embodiments, the STA may be a station having a low power requirement, for example, a STA that cannot be used as an AP, namely, a non-access point station (non-AP STA).

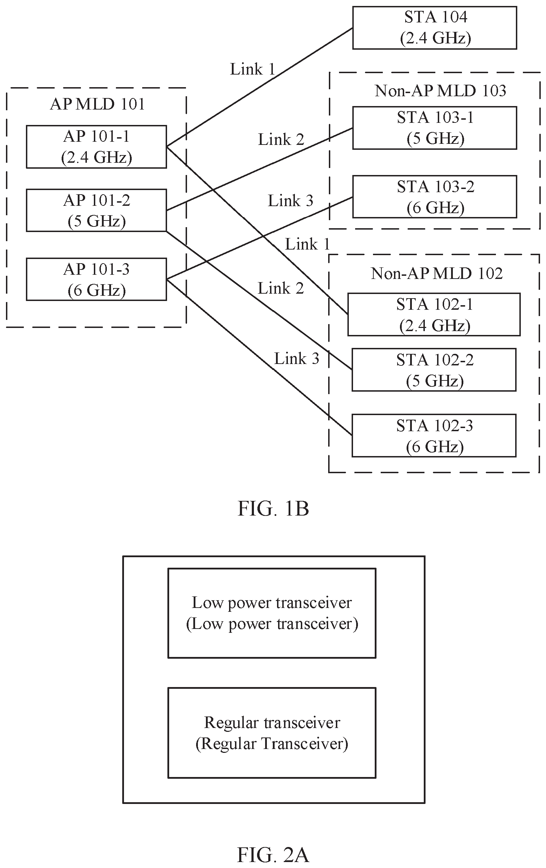

In some embodiments, as shown in FIG. 1B, the AP may be an AP in an AP multi-link device (multi-link device, MLD), for example, an AP 101-1, an AP 101-2, or an AP 101-3 in an AP MLD 101. The STA may be a conventional STA 104, may be a STA in a non-AP MLD 103, for example, a STA 103-1 or a STA 103-2, or may be a STA 102-1, a STA 102-2, or a STA 102-3 in a non-AP MLD 102. The MLD is a logical entity that can support a plurality of affiliated stations and operate a plurality of stations and that presents only one medium access control data service and one medium access control (medium access control address, MAC) service access point to a logical link control layer (a logical entity that is capable of supporting more than one affiliated station and can operate using one or more affiliated STAs, and that presents one medium access control data service and a single MAC service access point to the logical link control sublayer). The plurality of affiliated stations in the MLD are logical entities, and may be implemented on different chips, or may be implemented on a chip in a centralized manner. This is not limited in this application. In addition, frequency bands supported by the plurality of affiliated stations in the MLD shown in FIG. 1B, for example, 2.4 GHz, 5 GHz, or 6 GHz, are merely examples. To adapt to development of standards, the affiliated stations in the MLD support other frequency bands.

It may be understood that the names of the devices shown in FIG. 1A and FIG. 1B are merely examples, and there may be other names in a future communication system. Quantities of devices in FIG. 1A and FIG. 1B are merely examples, and more or fewer devices may be alternatively included. For example, one AP may simultaneously communicate with a plurality of STAs. This is not limited in this application.

FIG. 2A is a diagram of a structure of a possible STA according to an embodiment of this application. The STA includes at least two transceivers, and different transceivers in the at least two transceivers correspond to different power consumption or sending/receiving capabilities.

For ease of description, two transceivers are used as an example in this specification. In the two transceivers, a transceiver with a lower sending/receiving capability or lower power consumption is referred to as a low power transceiver (low power transceiver), and a transceiver with a higher sending/receiving capability or higher power consumption is referred to as a regular transceiver (regular transceiver). It should be understood that the names of the transceivers in this specification are merely examples, and actually, there may be other names. For example, the regular transceiver may be alternatively referred to as a main transceiver, and the low power transceiver may be alternatively referred to as a woken-up transceiver; or the regular transceiver may be alternatively referred to as a first transceiver, and the low power transceiver may be alternatively referred to as a second transceiver. This is not limited in this application.

Power consumption of the low power transceiver is lower than power consumption of the regular transceiver, and a sending/receiving capability of the low power transceiver is lower than a sending/receiving capability of the regular transceiver (for example, hardware implementation of the low power transceiver is simple, a format of a PPDU that can be received by the low power transceiver is limited (for example, the low power transceiver can send/receive only a legacy (legacy) PPDU), and a bandwidth, a modulation and coding scheme (modulation and coding scheme, MCS) order, the number of streams, and the like of the low power transceiver are relatively low).

In specific implementation, the low power transceiver and the regular transceiver may be two different hardware modules, or may be two different software modules in a same hardware module. This is not specifically limited in this embodiment of this application.

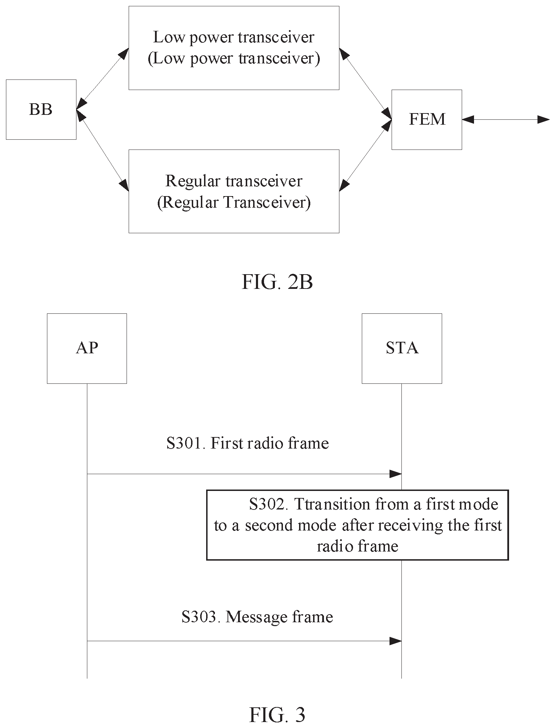

In a possible implementation, FIG. 2B is a diagram of a hardware structure of a possible STA according to an embodiment of this application. A low power transceiver and a regular transceiver are two different hardware modules, for example, include different radio frequency channels (for example, different sending/receiving channels, or different receiving channels). The low power transceiver and the regular transceiver share a baseband (baseband, BB) and a radio frequency front-end module (Front-End Modules, FEM).

Certainly, FIG. 2B is merely an example. In an actual application, the low power transceiver and the regular transceiver may not share a BB and an FEM, but each correspond to one group of a BB and an FEM. Alternatively, the low power transceiver and the regular transceiver share a BB but do not share an FEM; or the low power transceiver and the regular transceiver may not share a BB but share an FEM. In a possible implementation, the low power transceiver and the regular transceiver may be virtual (for example, different software modules). In this case, the low power transceiver and the regular transceiver may be omitted, but the station may still transmit a signal by using different power consumption or sending/receiving capabilities (for example, reference can be made to the following first mode and second mode).

FIG. 3 is a flowchart of a communication method according to an embodiment of this application. The method may be applied to the communication scenario shown in FIG. 1A or FIG. 1B. Unless otherwise specified, a "station" in this application may be the station (for example, the STA shown in FIG. 1A), or may be a communication module in the station or a circuit or a chip (for example, a modem (Modem) chip, also referred to as a baseband (baseband) chip, or a system on chip (System on Chip, SoC) chip or a system in package (System in Package) SIP chip including a modem core) responsible for a communication function in the station. An "access point" in this application may be the access point (for example, the AP shown in FIG. 1A), or may be a communication module in the access point or a circuit or a chip (for example, a modem (Modem) chip, also referred to as a baseband (baseband) chip, or a system on chip (System on Chip, SoC) chip or a system in package (System in Package) SIP chip including a modem core) responsible for a communication function in the access point.

The method in this embodiment includes S301 to S303.

S301. An access point sends a first radio frame to a station, and the station receives the first radio frame from the access point in a first mode.

The first radio frame is used to trigger the station to transition a mode, and the first radio frame includes identification information of the station.

The first mode is that the station transmits a signal (including sending an uplink signal to the access point and receiving a downlink signal from the access point) through a low power transceiver. When the station is in the first mode, the low power transceiver of the station is in an awake state (awake state), and a regular transceiver of the station is in a doze state (doze state).

In some embodiments, that the station receives the first radio frame from the access point in the first mode in S301 may be alternatively described as follows: The station receives the first radio frame from the access point through the low power transceiver. That the first radio frame is used to trigger the station to transition a mode may be alternatively described as follows: The first radio frame is used to trigger the station to wake up the regular transceiver.

It may be understood that, that the transceiver is in the awake state means that the transceiver is in a working state, and the awake state may be alternatively described as an on state or another name. This is not limited in this embodiment of this application. That the transceiver is in the doze state means that the transceiver is in a non-working state, and the doze state may be alternatively described as an off state, a sleep state, or another name. This is not limited in this embodiment of this application.

In some embodiments, the first mode may be alternatively referred to as a listening mode (listening mode), a low power listening mode (low power listening mode), or another name.

In specific implementation, when sending the first radio frame to the station, the access point may send the first radio frame in a unicast, multicast, or broadcast manner.

When the access point sends the first radio frame in a unicast manner, the identification information that is of the station and that is carried in the first radio frame may be address information of the station, for example, an internet protocol (internet protocol, IP) address, a media access control (media access control address, MAC) address, or an association identifier (association identifier, AID).

When the access point sends the first radio frame in a multicast manner, the first radio frame may carry identification information (for example, a group address) of a group in which the station is located, and the identification information of the group may be used as the identification information of the station; or the first radio frame carries identification information of each station in a group in which the station is located, including the identification information of the station.

When the access point sends the first radio frame in a broadcast manner, the identification information that is of the station and that is carried in the first radio frame may be a broadcast address. Because the broadcast address corresponds to all stations, the first radio frame may further include the identification information of the station, for example, an association identifier of the station.

In some embodiments, the station may be a non-AP STA, the station has a low power requirement, or the station cannot be used as an access point.

It may be understood that the first radio frame is a frame within a receiving capability range of the first mode (or the low power transceiver) of the station. The first radio frame may be a management frame, a control frame, a data frame, or the like. This is not limited.

S302. The station transitions from the first mode to a second mode after receiving the first radio frame.

For example, the station may determine, based on the identification information in the first radio frame, that the first radio frame is a radio frame sent to the station, and then transition from the first mode to the second mode based on the first radio frame.

The second mode is that the station transmits a signal (including sending an uplink signal to the access point and receiving a downlink signal from the access point) through the regular transceiver. When the station is in the second mode, the regular transceiver of the station is in an awake state, and the low power transceiver of the station is in an awake state or a doze state.

In some embodiments, that the station transitions from the first mode to the second mode after receiving the first radio frame in S302 may be alternatively described as follows: The station wakes up the regular transceiver after receiving the first radio frame.

In some embodiments, the first radio frame may be referred to as a synchronization (sync) frame, indicating that the frame is used by the station to synchronize with a Wi-Fi signal corresponding to the station, to wake up the regular transceiver. Certainly, the first radio frame may alternatively have another name. A name of the first radio frame is not limited in this embodiment of this application.

In some embodiments, the second mode may be alternatively referred to as a "message exchange mode" or another name.

It may be understood that "transition" in this specification may also be adaptively replaced with "enable", "enter", or another term. This is not limited. For example, S302 may be alternatively described as follows: The station enables the second mode after receiving the first radio frame; the station enters the second mode after receiving the first radio frame; the station stops, ends, or disables the first mode and enables the second mode after receiving the first radio frame; or the station stops, ends, or disables the first mode and enters the second mode after receiving the first radio frame.

S303. The access point sends a message frame to the station, and the station receives the message frame from the access point in the second mode.

The message frame may include one or more of a data frame, a management frame, a control frame, or the like. For ease of description, in the following descriptions, a data frame is used as an example for description. A data frame mentioned in subsequent embodiments may be equivalently replaced with a management frame, a control frame, or another message frame.

Based on the foregoing descriptions of the second mode, in some embodiments, that the station receives the data frame from the access point in the second mode in S303 may be alternatively described as follows: The station receives the data frame from the access point through the regular transceiver.

In specific implementation, there may be one or more data frames in S303.

It may be understood that the data frame sent by the access point in S303 is a frame within a receiving capability range of the second mode (or the regular transceiver) of the station. For ease of differentiation, in this specification, a data frame received by the station in the first mode (or through the low power transceiver) may be referred to as a "first data frame", and a data frame received by the station in the second mode (or through the regular transceiver) may be referred to as a "second data frame". In this case, the data frame in S303 is a second data frame. For example, the first radio frame may be a first data frame. It may be understood that the first data frame is within the receiving capability range of the first mode (or the low power transceiver) of the station, and the second data frame is within the receiving capability range of the second mode (or the regular transceiver) of the station. Certainly, in some embodiments, a data frame may be within both the receiving capability range of the second mode (or the regular transceiver) of the station and the receiving capability range of the first mode (or the low power transceiver) of the station.

It may be understood that the first data frame may also be replaced with a first management frame or a first control frame, and the second data frame may also be replaced with a second management frame or a second control frame.

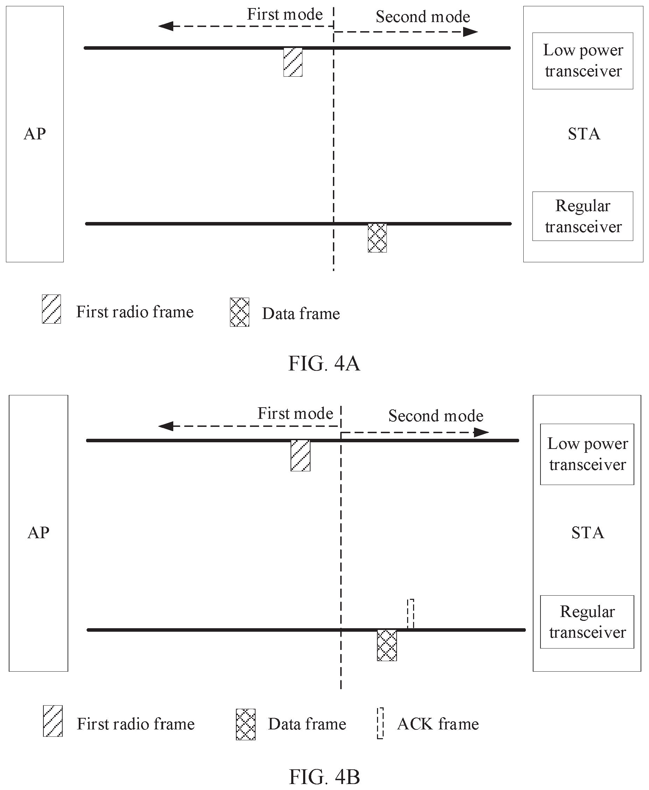

For a better understanding of the foregoing solution, a frame exchange procedure between the access point and the station is further shown herein by using a frame exchange diagram. As shown in FIG. 4A, two horizontal axes in FIG. 4A indicate a case in which the station performs frame exchange with the access point through different transceivers. In the two horizontal axes, an upper horizontal axis indicates that the station performs frame exchange through the low power transceiver, and a lower horizontal axis indicates that the station performs frame exchange through the regular transceiver. A position on each horizontal axis indicates a time order of frame exchange, where a left position indicates an earlier frame and a right position indicates a later frame. A same position on the two horizontal axes in a vertical direction indicates a same time point. For any horizontal axis, frame sending behavior of the station is identified on an upper side of the axis (a frame on the upper side of the axis is a frame sent by the station), and frame sending behavior of the access point is identified on a lower side of the axis (a frame on the lower side of the axis is a frame sent by the access point).

It may be understood that the low power transceiver and the regular transceiver belong to a same station. Therefore, the two horizontal axes (or the low power transceiver and the regular transceiver of the station) in FIG. 4A essentially correspond to a same channel (the same channel), and the two horizontal axes correspond to a same MAC addresses of the station. The two horizontal axes in FIG. 4A are merely used to distinguish whether a signal is sent/received through the low power transceiver or a signal is sent/received through the regular transceiver inside the station.

It may be understood that the foregoing method for interpreting FIG. 4A is applicable to all frame exchange diagrams in embodiments of this application, and the explanations are not repeated below.

In some embodiments, after receiving the data frame, the station may further send an acknowledgment (ACK) frame corresponding to the data frame to the access point, to notify the access point that the station correctly receives the data frame, as shown in FIG. 4B. Certainly, optionally, if the station does not correctly receive the data frame, the station may further feed back a negative acknowledgment (NACK) frame.

In the foregoing solution, the first radio frame sent by the access point to the station carries the identification information of the station, so that the station can perform mode transition when receiving a radio frame sent to the station (transition from the first mode to the second mode after receiving the first radio frame). This can ensure that the regular transceiver of the station is woken up by only a Wi-Fi signal sent to the station, to prevent the regular transceiver of the station from being woken up by a Wi-Fi signal of another device by mistake, thereby reducing power consumption of the station.

In a possible design, to ensure that the first radio frame can be received by the station in the first mode, the first radio frame needs to be a frame within the receiving capability range of the first mode (or the low power transceiver) of the station.

For example, the first radio frame meets one or more of the following conditions:
(1) A bandwidth corresponding to the first radio frame is less than (or does not exceed) a first threshold.

The bandwidth corresponding to the first radio frame is a bandwidth of a PPDU in which the first radio frame is located. In some embodiments, the first threshold may be an upper limit of a bandwidth that can be handled by the low power transceiver. Optionally, the first threshold may be any value less than or equal to an upper limit of a bandwidth that can be handled by the regular transceiver, and may specifically depend on product implementation. For example, the first threshold may be any one of 20 MHz, 40 MHz, 80 MHz, 160 MHz, or the like.

(2) An MCS order corresponding to the first radio frame is less than (or does not exceed) a second threshold.

The MCS order corresponding to the first radio frame is an MCS order of the PPDU in which the first radio frame is located. The MCS order is a modulation order of an MCS. In some embodiments, the second threshold may be an upper limit of an MCS order that can be handled by the low power transceiver. Optionally, the second threshold may be any value less than or equal to an upper limit of an MCS order that can be handled by the regular transceiver, and may specifically depend on product implementation. For example, the second threshold may be any integer in [0, 8], for example, 2, 4, 6, 8, or 10. It may be understood that modulation schemes corresponding to modulation orders 2, 4, 6, 8, and 10 are QPSK, 16QAM, 64QAM, 256QAM, and 1024QAM respectively.

(3) A number of streams corresponding to the first radio frame is less than (or does not exceed) a third threshold.

The number of streams may be a number of spatial and time streams (number of spatial and time stream, NSTS), a number of spatial streams (number of spatial stream, NSS), or the like. The number of streams corresponding to the first radio frame is a number of streams of the PPDU in which the first radio frame is located. In some embodiments, the third threshold may be an upper limit of the number of streams that can be handled by the low power transceiver. Optionally, the third threshold may be any value less than or equal to an upper limit of the number of streams that can be handled by the regular transceiver, and may specifically depend on product implementation. For example, the third threshold may be any integer in [1, 8], for example, 1 or 2.

It may be understood that, in specific implementation, the first radio frame may meet all the foregoing three conditions, or may meet only some of the conditions (for example, the bandwidth corresponding to the first radio frame is less than the first threshold, but the MCS order corresponding to the first radio frame is greater than the second threshold, and the number of streams corresponding to the first radio frame is greater than the third threshold). In addition, the first radio frame may alternatively meet another condition, provided that it can be ensured that the first radio frame is within the receiving capability range of the low power transceiver of the station.

Optionally, the first radio frame may further meet the following: A frame type of the first radio frame is a first type. The first type includes but is not limited to one or a combination of a plurality of a request-to-send (request-to-send, RTS) frame, a multi-user request-to-send (multi-user rts, MU-RTS) frame, a buffer status report poll (Buffer status report poll, BSRP) frame, or the like. In addition, the first type may alternatively include a new defined or self-defined management frame, control frame, data frame, or the like. Certainly, the foregoing types are merely examples, and actually, this is not limited thereto.

In an example, the first radio frame is a predefined frame, and the predefined frame includes but is not limited to one or a combination of a plurality of an RTS frame, an MU-RTS frame, a BSRP frame, or the like. Optionally, predefined may be specified in a protocol, preconfigured in a system, or the like.

Optionally, the first radio frame may further meet the following: A format of the PPDU in which the first radio frame is located is a first format. The first format includes, for example, but is not limited to, one or a combination of a plurality of a non-high throughput (non-high throughput, non-HT) PPDU, a high throughput (high throughput, HT) PPDU, a very high throughput (very high throughput, VHT) PPDU, an extremely high throughput (extremely high throughput, EHT) PPDU, or the like. Certainly, the foregoing types are merely examples, and actually, this is not limited thereto.

According to the foregoing design, the first radio frame (or the PPDU in which the first radio frame is located) can be received by the station in the first mode within the receiving capability range of the low power transceiver of the station, thereby improving reliability of the solution.

It may be understood that, to ensure that the first data frame can be received by the station in the first mode, the first data frame needs to be a frame within the receiving capability range of the first mode (or the low power transceiver) of the station. For a limit condition (for example, a bandwidth, an MCS order, or the number of streams) of the first data frame, refer to the foregoing related limit condition of the first radio frame. Details are not described herein again.

In this embodiment of this application, the first radio frame may trigger, in a plurality of manners, the station to transition a mode. The following provides several possible manners.

Manner 1. The first radio frame indicates the station to perform mode transition. A specific mode from which the station transitions and a specific mode to which the station transitions depend on a mode in which the station is currently in.

For example, if the station is in the first mode, the station transitions from the first mode to the second mode after receiving the first radio frame (the procedure shown in S301 and S302). Optionally, if the station is in the second mode, the station may transition from the second mode to the first mode after receiving the first radio frame.

Manner 2. The first radio frame indicates the station to transition (from the first mode) to the second mode.

Manner 3. The first radio frame indicates the second mode. After receiving the first radio frame, the station performs mode transition if a mode in which the station is currently in is different from the first mode.

Certainly, the foregoing several manners are merely examples, and actually, this is not limited thereto.

In a possible design, the access point may send a radio frame of a preset type to the station to trigger (or indicate) the station to perform mode transition. For example, the preset type is one or a combination of a plurality of a request-to-send (request-to-send, RTS) frame, a multi-user request-to-send (multi-user rts, MU-RTS) frame, a buffer status report poll (Buffer status report poll, BSRP) frame, a self-defined frame, a new frame, or the like. In a possible example, the preset type is the foregoing first type.

Correspondingly, the frame type of the first radio frame is the preset type (for example, the first type). After receiving the first radio frame, the station determines, on a basis that the frame type of the first radio frame is the preset type and based on the identification information in the first radio frame, to perform mode transition.

In another possible design, the access point may send, to the station, a radio frame that carries first indication information, to trigger (or indicate) the station to perform mode transition. Correspondingly, the first radio frame carries the first indication information. After receiving the first radio frame, the station determines, based on the first indication information in the first radio frame and the identification information in the first radio frame, to perform mode transition. It may be understood that, in this case, the frame type of the first radio frame may be a management frame, a control frame, a data frame, or the like. This is not limited in this application.

In some embodiments, the first indication information may be a 1-bit flag (flag) in the first radio frame.

For example, the access point may carry a flag to trigger the station to perform mode transition, that is, the station performs mode transition provided that a radio frame received by the station includes a flag. Correspondingly, the first radio frame carries a flag.

For example, the access point may use flags with different values to indicate the station to perform or not to perform mode transition. For example, flag=0 indicates to perform mode transition, and flag=1 indicates not to perform mode transition (certainly, actually, alternatively, flag=0 may indicate that mode transition is not required, and flag=1 may indicate that mode transition is required. This is not limited). Correspondingly, the first radio frame carries a flag, and flag=0.

For example, flag=0 indicates the first mode, and flag=1 indicates the second mode (certainly, actually, alternatively, flag=1 may indicate the first mode, and flag=0 may indicate the second mode. This is not limited). Correspondingly, the first radio frame carries a flag, and flag=1. After receiving the first radio frame, the station determines that the first mode in which the station is currently in is different from the second mode indicated by the flag in the first radio frame, and determines to perform mode transition.

In a possible design, the first radio frame may carry a parameter used after the station enters the second mode. For example, the first radio frame may carry one or more of the following parameters:
(1) a bandwidth or a bandwidth range, indicating a bandwidth used by the access point and the station to exchange a message frame after the station enters the second mode;
(2) the number of streams, indicating the number of streams used by the access point and the station to exchange a message frame after the station enters the second mode; and
(3) an MCS order upper limit, an MCS order lower limit, or the MCS order upper limit and the MCS order lower limit, indicating an MCS order used by the access point and the station to exchange a message frame after the station enters the second mode.

Certainly, the foregoing types are merely examples, and actually, this is not limited thereto.

In this way, reliability of frame exchange of the station with the access point in the second mode can be improved.

In a possible design, the access point may send a data frame to the station after determining that the station has transitioned to the second mode. For example, after receiving the first radio frame, the station may notify the access point that the station has transitioned to the second mode, notify the access point that the station is ready to receive a data frame from the access point, or notify the access point that the station has transitioned to the second mode and is ready to receive a data frame from the access point. After receiving the notification, the access point starts to transmit the data frame (for example, performs S303).

It may be understood that, in this design manner, the data frame sent by the access point is a second data frame.

It may be understood that, in this design manner, the first radio frame may be a management frame, a control frame, or a frame of another type. This is not limited. For example, the first radio frame may be a radio frame of the preset type (specifically, for example, the first type) described above.

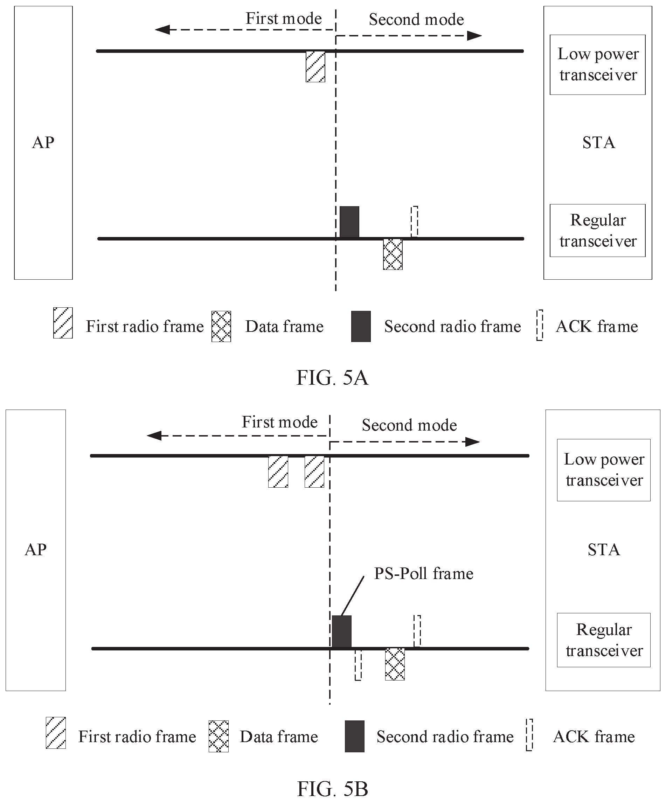

The following provides several possible notification manners:
In a possible implementation, the station sends a second radio frame to the access point in the second mode. The second radio frame is used to notify (or indicate) the access point that the station has transitioned to the second mode, the second radio frame is used to notify (or indicate) the access point that the station is ready to receive a data frame from the access point, or the second radio frame is used to notify (or indicate) the access point that the station has transitioned to the second mode and is ready to receive a data frame from the access point. In other words, the station may send the second radio frame to the access point after transitioning from the first mode to the second mode (after waking up the regular transceiver) and before receiving the data frame from the access point in the second mode, as shown in FIG. 5A.

In an example, the second radio frame may be a power-saving poll (PS-Poll) frame, as shown in FIG. 5B. It may be understood that the PS-Poll frame is used to request data from the access point. Correspondingly, the access point sends the data frame to the station after receiving the PS-Poll frame. Because there is no time limit for the station to send the PS-Poll frame, it can be ensured that the station sends the second radio frame to the access point after completing mode transition (or startup of the regular transceiver). This implementation is simple and reliable.

Optionally, when the second radio frame is a PS-Poll frame, the access point may send one or more first radio frames. For example, the access point may periodically send the first radio frame at a specified time interval, and stop sending the first radio frame when receiving the second radio frame sent by the station or when having not received the second radio frame yet when a quantity of sent first radio frames reaches a specified quantity. For example, FIG. 5B shows a case in which the access point may send two first radio frames and the station successfully receives a 2^{nd} first radio frame. In this way, a probability that the station receives the first radio frame can be increased.

Optionally, the access point may further send an ACK frame corresponding to the PS-Poll frame to the station after receiving the PS-Poll frame, and send the data frame to the station after sending the ACK frame, as shown in FIG. 5B. Alternatively, the access point may further send the data frame to the station after receiving the PS-Poll frame (may not send an ACK frame corresponding to the PS-Poll frame).

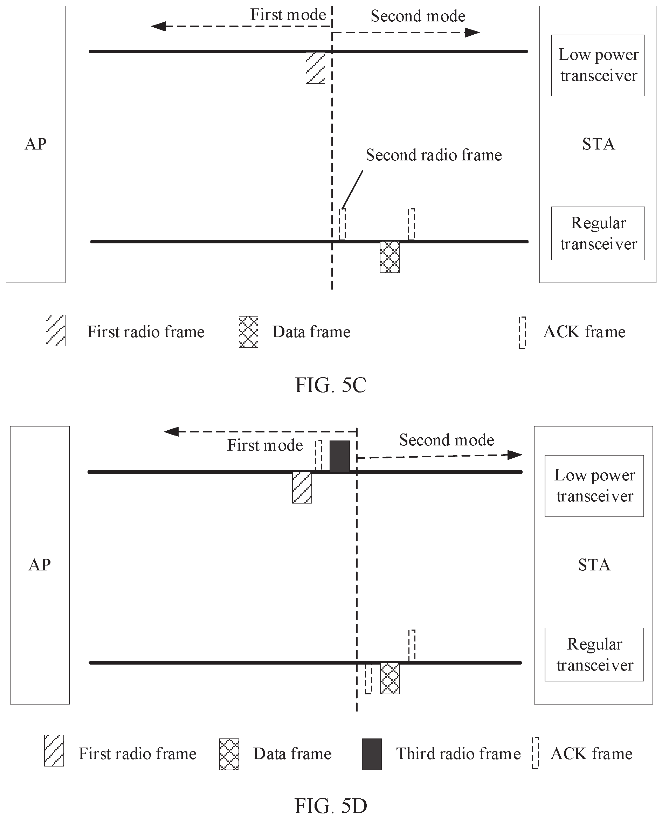

In another example, the second radio frame may be an acknowledgment (ACK) frame corresponding to the first radio frame, as shown in FIG. 5C. Correspondingly, the access point sends the data frame to the station after receiving the ACK frame corresponding to the first radio frame. In this way, the ACK frame of the first radio frame may be directly used to notify the access point that the station has transitioned to the second mode or notify the access point that the station is ready to receive a data frame from the access point, thereby saving system resources.

Further, it takes specific time for the station to transition a mode (or start the regular transceiver, or it takes specific time for the regular transceiver to become stable from startup), and sending of the ACK frame needs to be completed by the station within a period of time (for example, a short interframe space (short interframe space, SIFS)) after the station determines that the first radio frame is correctly received. Therefore, to ensure that the station has sufficient time to complete mode transition (or complete startup of the regular transceiver), the access point may add a padding (padding) field to the first radio frame.

Optionally, a length of "padding" in the first radio frame reaches or exceeds a first length, and the first length is related to time required for the station to perform mode transition (specifically, transition from the first mode to the second mode) (or time required for the station to start the regular transceiver). For example, the first length corresponds to shortest time required for the station to perform mode transition. In this case, the first length may be referred to as shortest padding time used by the station to perform mode transition. The first length may be preset (for example, specified in a protocol), or may be indicated by the station to the access point in advance (for example, indicated by the station to the access point in a negotiation procedure, where reference can be made to related descriptions in the following negotiation procedure). This is not limited. When generating the first radio frame, the access point may add, to the first radio frame, "padding" whose length is greater than or equal to the first length.

In this way, time reserved for the station to parse the first radio frame and wake up the regular transceiver is increased by using "padding", so that it can be ensured that the station sends the second radio frame to the access point after mode transition (or starting the regular transceiver, or after the regular transceiver becomes stable from startup). This implementation is simple and reliable.

The foregoing implementation may be implemented without depending on a sending function of the low power transceiver. For example, the low power transceiver may be merely configured to listen for and receive the first radio frame. This helps reduce costs of the low power transceiver.

In another possible implementation, the station sends a third radio frame to the access point in the first mode. For example, the third radio frame is used to notify (or indicate) the access point that the station has transitioned to the second mode, the third radio frame is used to notify (or indicate) the access point that the station is ready to receive a data frame from the access point, or the third radio frame is used to notify (or indicate) the access point that the station has transitioned to the second mode and is ready to receive a data frame from the access point. The third radio frame may be a response (Response) frame, an ACK frame, or the like corresponding to the first radio frame. This is not limited. In other words, the station may send the third radio frame to the access point after receiving the first radio frame, regardless of whether the station has completed mode transition (or startup of the regular transceiver, or whether the regular transceiver has become stable from startup), as shown in FIG. 5D.

Similarly, to ensure that the station has sufficient time to wake up the regular transceiver, the access point may add a padding field to the first radio frame. Optionally, a length of "padding" in the first radio frame reaches or exceeds a second length, and the second length is related to time required for the station to start the regular transceiver. The second length is related to time required for the station to perform mode transition (specifically, transition from the first mode to the second mode) (or time required for the station to start the regular transceiver). For example, the second length corresponds to shortest time required for the station to perform mode transition. In this case, the second length may be referred to as shortest padding time used by the station to perform mode transition. The second length may be preset (for example, specified in a protocol), or may be indicated by the station to the access point in advance (for example, indicated by the station to the access point in a negotiation procedure, where reference can be made to related descriptions in the following negotiation procedure). This is not limited. When generating the first radio frame, the access point may add, to the first radio frame, "padding" whose length is greater than or equal to the second length.

It may be understood that shortest padding time may be different in different scenarios. For example, compared with the foregoing scenario in which the station sends the ACK to the access point in the second mode, in this manner, a time limit for sending the ACK frame (or the Response frame) by the station to the access point in the first mode is slightly wider. Therefore, the second length herein may be less than or equal to the first length in the foregoing.

Optionally, the station may send an ACK frame corresponding to the first radio frame to the access point after receiving the first radio frame, and send a third radio frame to the access point after sending the ACK frame corresponding to the first radio frame. The access point sends an ACK frame corresponding to the third radio frame to the station after receiving the third radio frame, and sends the data frame to the station after sending the ACK frame corresponding to the third radio frame. The station may receive the ACK frame corresponding to the third radio frame through the regular transceiver or the low power transceiver (FIG. 5D shows that the station receives the ACK frame through the regular transceiver). This is not limited. The first radio frame and the third radio frame may be management frames.

In the foregoing implementation, there is a clear division of labor between the low power transceiver and the regular transceiver (or between the first mode and the second mode) (the regular transceiver is responsible for a related procedure of exchanging the data frame, and the low power transceiver is responsible for a related procedure of listening for the first radio frame). The logic is simple and easy to implement.

In a possible design, the access point may directly start to send a data frame to the station without depending on a notification of the station. It may be understood that, in this design manner, the data frame sent by the access point may include a first data frame, include a second data frame, or include a first data frame and a second data frame.

For example, the first data frame has one or more of the following features:
(1) A bandwidth is less than a first bandwidth.

For example, the bandwidth is less than (or does not exceed) 20 MHz.

(2) A format of a PPDU is a second format.

For example, the format of the PPDU is a Non-HT PPDU.

(3) An MCS order is lower than a threshold.

(4) The number of streams is less than the first number of streams.

For example, the number of streams is a single stream.

In specific implementation, the first data frame may meet all the foregoing four conditions, or may meet only some of the conditions (for example, the bandwidth corresponding to the first data frame is less than 20 MHz, but the MCS order is greater than the threshold). In addition, the first data frame may alternatively meet another condition, provided that it can be ensured that the first data frame is within a sending/receiving capability range of the first mode (or the low power transceiver) of the station.

It may be understood that, in this design manner, the first radio frame may be a management frame, a control frame, or a data frame, and is specifically, for example, a radio frame of the first type, or a radio frame that carries the first indication information.

In some embodiments, the access point may directly start to send a first data frame to the station when the station is in the first mode, and the station receives the first data frame in the first mode.

For example, the first radio frame in FIG. 4A or FIG. 4B may be a first data frame.

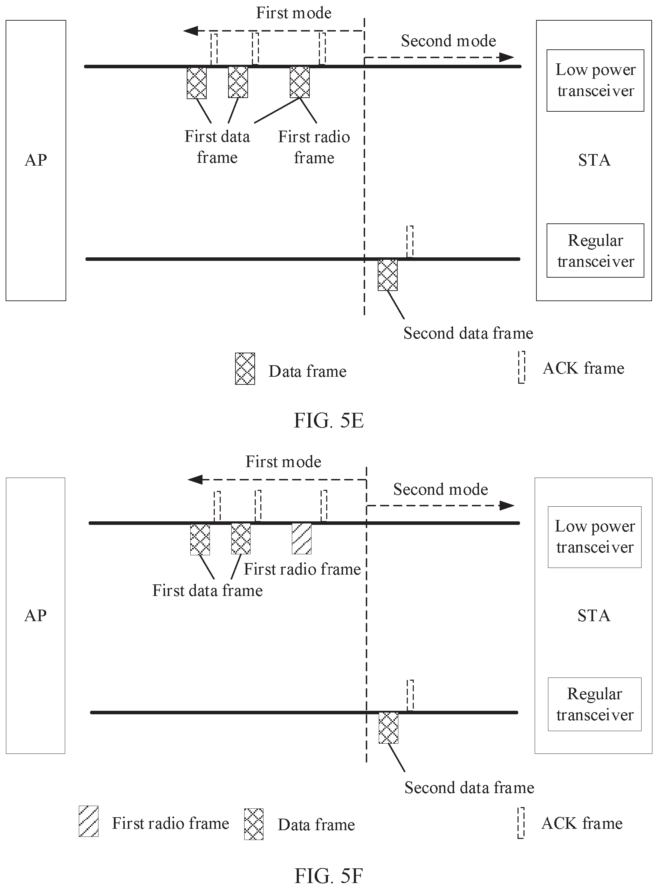

For example, referring to FIG. 5E or FIG. 5F, the access point may first send at least one first data frame (FIG. 5E shows only two first data frames), and the station receives the at least one first data frame in the first mode. When requiring the station to receive a data frame in the second mode, the access point sends a first radio frame, and the station receives the first radio frame in the first mode (corresponding to step S301 in the foregoing). After sending the first radio frame, the access point sends at least one second data frame, and the station receives the at least one second data frame in the second mode (corresponding to step S303 in the foregoing).

In FIG. 5E, for example, the first radio frame is a first data frame that carries the first indication information. It may be understood that, in the example provided in FIG. 5E, at least one first data frame before the first radio frame may not carry indication information or carry indication information different from the first indication information. For example, in the scenario shown in FIG. 5E, each first data frame carries a flag, and a value of the flag indicates whether a next data frame needs to be received in the second mode, where flag=1 in 1^{st} and 2^{nd} first data frames indicates that a next data frame needs to be received by the station in the first mode (or through the low power transceiver), and flag=0 in a 3^{rd} first data frame (the first radio frame) indicates that a next data frame needs to be received by the station in the second mode (or through the regular transceiver).

In FIG. 5F, for example, the first radio frame is a radio frame of a preset type. In the scenario shown in FIG. 5F, the first data frame sent by the access point is not of the preset type. When requiring the station to transition to the second mode, the access point independently sends a radio frame (the first radio frame) of the preset type to indicate the station to transition a mode.

Certainly, alternatively, when the access point needs to send a data frame to the station, the access point may not send a first data frame before a first radio frame, but directly send the first radio frame to the access point (corresponding to S301 in the foregoing), and then start to send a second data frame to the station. The station receives the second data frame in the second mode (corresponding to S302 in the foregoing).

In a possible design, after the access point and the station complete data frame exchange, the station may transition back to the first mode (for example, turn off the regular transceiver, and further wake up the low power transceiver if the low power transceiver is in a doze state).

In a possible implementation, the access point sends a seventh radio frame after completing sending of the data frame, and the station transitions back to the first mode after receiving the seventh radio frame sent by the access point. In this way, the access point may indicate, when there is no data frame sending requirement, the station to transition to the first mode, or the access point may exchange a data frame with the station in the first mode of the station, thereby reducing power consumption.

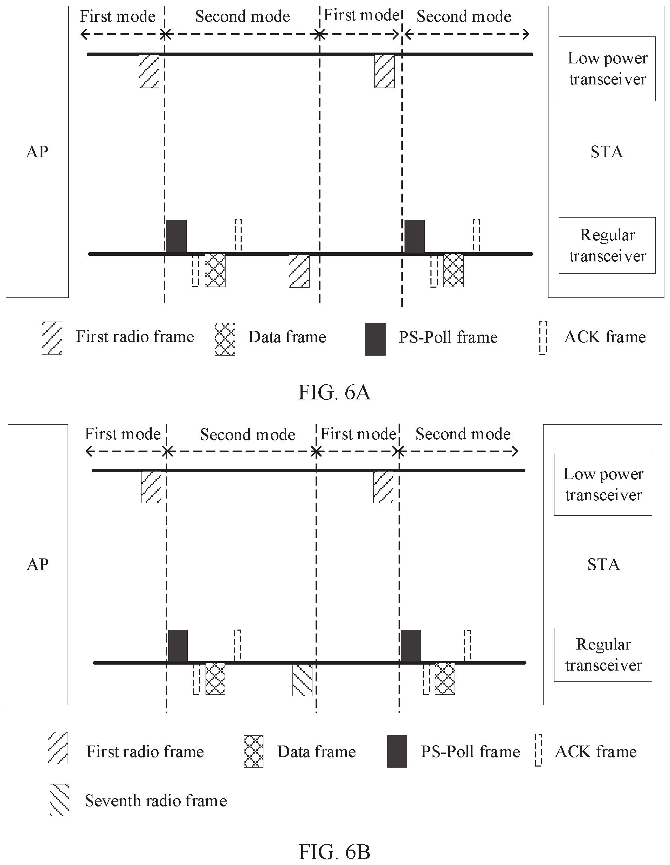

Optionally, the seventh radio frame may be the same as the first radio frame. For example, the seventh radio frame is of the first type, or the seventh radio frame carries the first indication information. In this case, the access point may send a plurality of first radio frames, so that the station alternately transitions between the first mode and the second mode for a plurality of times. For example, as shown in FIG. 6A, a 1^{st} first radio frame causes the access point to transition from the first mode to the second mode, a 2^{nd} first radio frame causes the access point to transition from the second mode to the first mode, and a 3^{rd} first radio frame causes the access point to transition from the first mode to the second mode.

Optionally, the seventh radio frame may be different from the first radio frame. For example, the first radio frame is of the first type, the seventh radio frame is of a second type, and the first type is different from the second type; or the first radio frame carries the first indication information (for example, flag=0), and the seventh radio frame carries second indication information (for example, flag=1). In this case, the access point may alternately send the first radio frame and the seventh radio frame, so that the station alternately transitions between the first mode and the second mode. For example, as shown in FIG. 6B, a 1^{st} first radio frame causes the access point to transition from the first mode to the second mode, a 1^{st} seventh radio frame causes the access point to transition from the second mode to the first mode, and a 2^{nd} first radio frame causes the access point to transition from the first mode to the second mode.

In this way, communication flexibility can be improved, and device power consumption can be reduced.

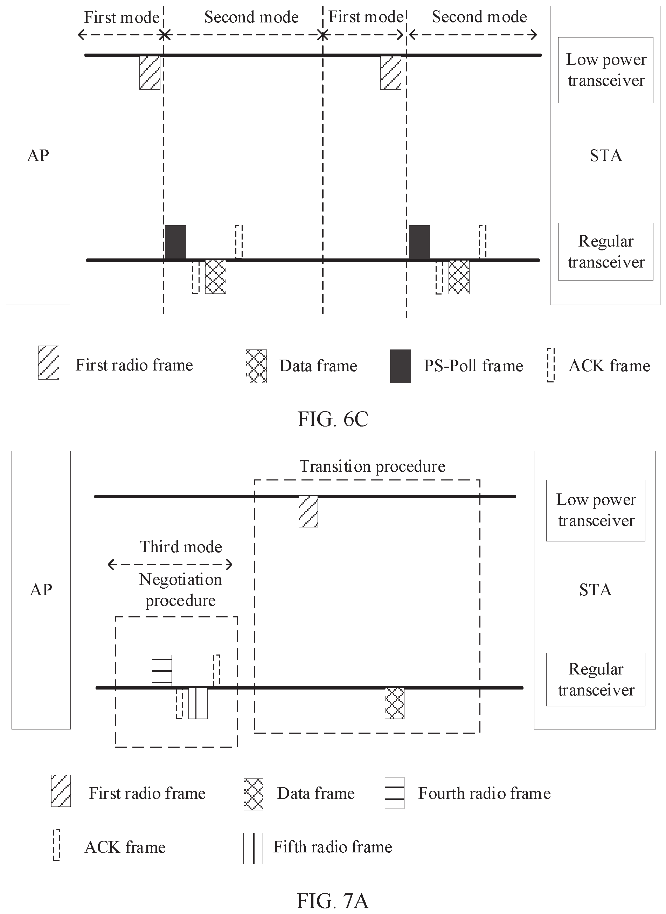

In another possible implementation, the station may automatically transition back to the first mode after data frame exchange is completed or ends (for example, after having not received a data frame from the access point yet before preset time expires), and determine, through listening in the first mode, whether there is a first radio frame or a first data frame from the access point. If a next exchange of a second data frame needs to be performed, the access point needs to send a new first radio frame, so that the station enters the second mode again. This is shown in FIG. 6C.

In this way, the station may automatically transition to the first mode, thereby reducing power consumption.

In a possible implementation, for example, the station is a non-AP STA. After the non-AP STA enters the second mode, if one or more of the following conditions are met, frame exchange between the non-AP STA and the access point ends, and the non-AP STA may perform an operation of transitioning back to the first mode:
1. A MAC layer of the non-AP STA does not receive a physical layer-receive start indication (PHY-RXSTART.indication) primitive within timeout period of a SIFS time (aSIFSTime) + a slot time (aSlotTime) + a receive physical layer start delay (aRxPHYStartDelay). aRxPHYStartDelay is equal to 20 microseconds, and the timeout period may start from the end of a PPDU sent by the non-AP STA in response to a frame latest received from the access point or from the end of reception of a PPDU carrying a frame that is sent by the access point to the non-AP STA and that does not require an immediate acknowledgment.

For example, if the MAC layer of the non-AP STA does not start to receive any frame within the timeout period, frame exchange ends.

2. The MAC layer of the non-AP STA receives a physical layer-receive start indication (PHY-RXSTART.indication) primitive within timeout period of a SIFS time (aSIFSTime) + a slot time (aSlotTime) + a receive physical layer start delay (aRxPHYStartDelay). The timeout period may start from the end of a PPDU sent by the non-AP STA in response to a frame latest received from the access point or from the end of reception of a PPDU carrying a frame that is sent by the access point to the non-AP STA and that does not require an immediate acknowledgment. In addition, the non-AP STA does not detect any one of the following frames within a PPDU corresponding to PHY-RXSTART.indication:
(1) a single-address frame whose receive address (receive address, RA) is equal to a MAC address of the non-AP STA;
(2) a trigger frame with a user information (User Info) field addressed to the non-AP STA;
(3) a CTS-to-self frame whose RA is equal to a MAC address of the access point;
(4) a multi-station block acknowledgment frame (Multi-STA Block Ack frame) with a per association identifier traffic identifier information (Per AID TID Info) field addressed to the non-AP STA; and
(5) an NDP announcement (NDP Announcement) frame with a STA Info field addressed to the non-AP STA and a sounding null data packet (Sounding NDP).

For example, if the MAC layer of the non-AP STA starts to receive a data frame within the timeout period, but a received data frame is not sent to the non-AP STA, frame exchange ends.

3. The non-AP STA does not respond to a latest received frame that is from the access point and that requires an immediate reply after a SIFS.

For example, if the non-AP STA does not respond to a frame that is sent by the access point and that requires a reply, frame exchange ends.

In a possible design, the station receives the data frame from the access point in the second mode (S303) only after a plurality of times of mode transition.

For example, after S302 and before S303, the station transitions back to the first mode from the second mode due to triggering of an abnormal event (the abnormal event is not specifically limited in this application). The access point mistakenly considers that the station has transitioned to the second mode, and therefore sends a second data frame. The station fails to receive the second data frame in the first mode, and does not feed back an ACK frame corresponding to the second data frame to the access point. The access point determines, on a basis that the ACK frame is not received, that the station is not in the second mode, and therefore sends a first radio frame again. The station transitions from the first mode to the second mode again. Then, the access point sends the second data frame again, and at this time, the station may receive the data frame from the access point in the second mode (S303).

For example, after S302 and before S303, the station transitions back to the first mode from the second mode due to triggering of an abnormal event (the abnormal event is not specifically limited in this application), and the station sends an abnormality notification to the access point. After receiving the abnormality notification, the access point sends a first radio frame again, so that the station transitions from the first mode to the second mode again. Then, the access point sends the data frame, and the station may receive the data frame from the access point in the second mode (S303).

For example, after S302 and before S303, the station transitions back to the first mode from the second mode due to triggering of an abnormal event (the abnormal event is not specifically limited in this application). The access point mistakenly considers that the station has transitioned to the second mode, and therefore sends a data frame. The data frame is within the receiving capability range of the second mode (or the regular transceiver) of the station, and is also within the receiving capability range of the first mode (or the low power transceiver) of the station, and therefore the station receives the data frame in the first mode. Subsequently, only after the station successfully transitions to the second mode after being triggered by another event (for example, the access point sends a first radio frame again), the station receives the data frame from the access point in the second mode (S303).

Certainly, the foregoing is merely several possible examples, and actually, this is not limited thereto.

In a possible design, the access point and the station may enter, by using a negotiation procedure, the method procedure provided above. For ease of description, the method procedure provided above is referred to as a "transition procedure". The transition procedure may include transitioning from the first mode to the second mode, may include transitioning from the second mode to the first mode, or may include transitioning from the first mode to the second mode and transitioning from the second mode to the first mode. Optionally, the transition procedure may include a frame exchange procedure (for example, the foregoing provided exchange procedures related to the first radio frame, the data frame, the ACK frame, the PS-Poll frame, and the like) between any two adjacent mode transitions.

It may be understood that the "transition procedure" may be alternatively described as a "low power mode" or the like. This is not limited. The word "enter" may also be replaced with "enable", "start", or another word. This is not limited.

For example, as shown in FIG. 7A, the negotiation procedure may include: the station sends a fourth radio frame to the access point in a third mode. The fourth radio frame is used to request entry into a transition procedure from the access point or notify the access point of entry into a transition procedure. The third mode is that the station can transmit a signal through only the regular transceiver. It may be understood that, in the third mode, the regular transceiver of the station is in an awake state, and the low power transceiver is in a doze state.

When the fourth radio frame is used to request entry into a transition procedure from the access point, the access point may send a fifth radio frame to the station after receiving the fourth radio frame. The fifth radio frame is used to notify the station that the access point consents to entry into the transition procedure. For example, the fourth radio frame is a request (Request) frame, and the fifth radio frame is a response (Response) frame corresponding to the Request frame.

Optionally, after receiving the Request frame, the access point may further feed back an ACK frame corresponding to the Request frame to the station. Optionally, after receiving the Response frame, the station may further feed back an ACK frame corresponding to the Request frame to the station.

When the fourth radio frame is used to notify the access point of entry into a transition procedure (the station unilaterally determines to enter the transition procedure without consent of the access point), the access point may not send any feedback information (for example, does not send a Response frame or an ACK frame), or the access point sends a fifth radio frame (for example, an ACK frame corresponding to the fourth radio frame) to the station after receiving the fourth radio frame. The fifth radio frame is used to notify the station that the access point receives the fourth radio frame or accepts a request in the fourth radio frame sent by the station.

In addition, the access point may unilaterally determine to enter a transition procedure (for example, merely the access point sends a fifth radio frame to the station). This is not limited in this application.

It may be understood that, in FIG. 7A, the frame exchange procedure shown in FIG. 4A is used as an example to show that the access point and the station enter a transition procedure through negotiation, and the negotiation method of the access point and the station is applicable to all the frame exchange procedures provided in this specification.

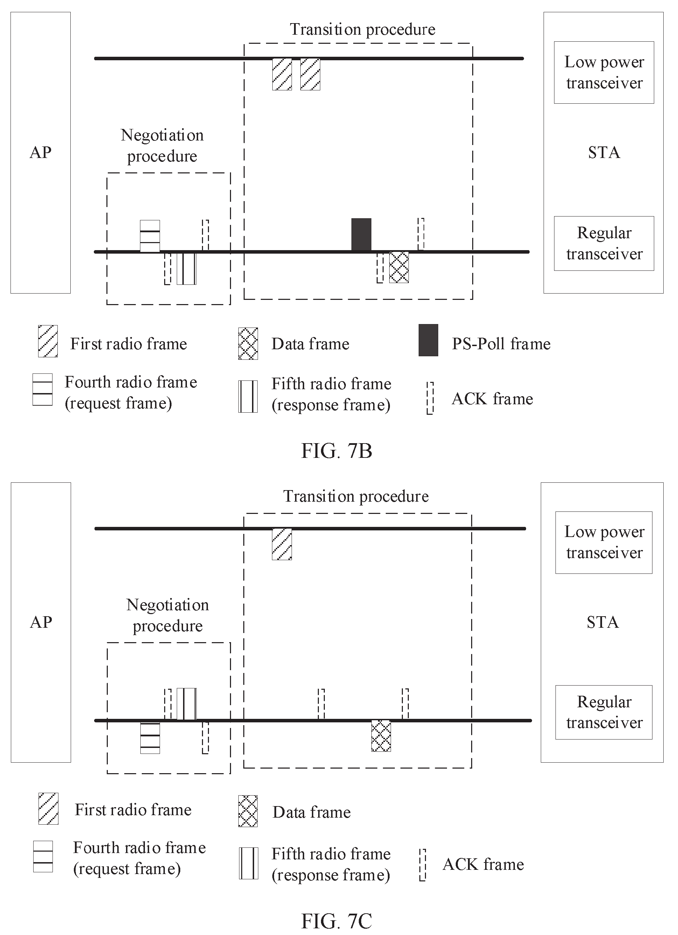

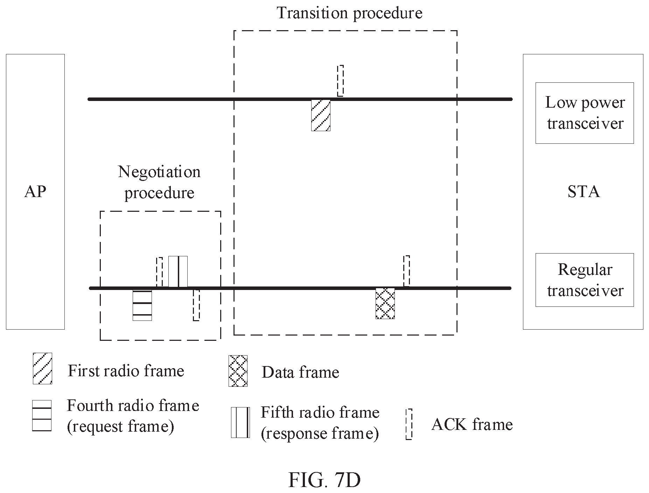

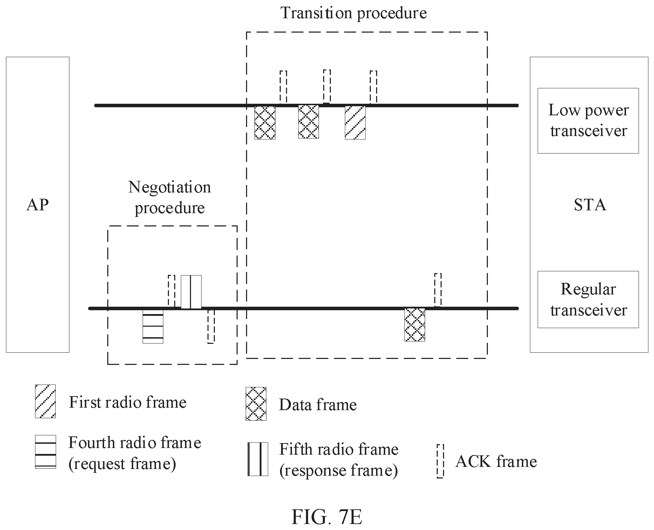

The following provides several possible examples:
Example 1. As shown in FIG. 7B, the frame exchange procedure shown in FIG. 5B is used as an example to show that the access point and the station enter a transition procedure through negotiation. Specifically, the station sends a Request frame to the access point in the third mode (or through the regular transceiver), to request entry into a transition procedure. After receiving the Request frame, the access point feeds back an ACK frame corresponding to the Request frame to the station, and sends a Response frame to the station, to indicate consent to entry into the transition procedure. After receiving the Response frame, the station feeds back an ACK frame corresponding to the Response frame to the access point, and then enters the transition procedure. After entering the transition procedure, the station first enters the first mode, and listens for a radio frame from the access point. The access point sends one or more first radio frames to the station, and the station transitions from the first mode to the second mode after successfully receiving a 1^{st} first radio frame. The station sends a PS-Poll frame to the access point in the second mode, to notify the access point that the station has transitioned to the second mode. After receiving the PS-Poll frame, the access point sends an ACK frame corresponding to the PS-Poll frame to the station, and starts data frame transmission to transmit a data frame to the station. The station receives the data frame in the second mode, and feeds back an ACK frame corresponding to the data frame to the access point in the second mode after receiving the data frame.
Example 2. As shown in FIG. 7C, the frame exchange procedure shown in FIG. 5C is used as an example to show that the access point and the station enter a transition procedure through negotiation. A difference of FIG. 7C from FIG. 7B is as follows: After the station transitions from the first mode to the second mode, in FIG. 7C, the station sends an ACK frame (that may be alternatively a PS-Poll frame) in the second mode to notify the access point that the station has transitioned to the second mode.
Example 3. As shown in FIG. 7D, the frame exchange procedure shown in FIG. 5D is used as an example to show that the access point and the station enter a transition procedure through negotiation. A difference of FIG. 7D from FIG. 7B and FIG. 7C is as follows: After the station transitions from the first mode to the second mode, the station sends an ACK frame in the first mode to notify the access point that the station has transitioned to the second mode.
Example 4. As shown in FIG. 7E, the frame exchange procedure shown in FIG. 5F is used as an example to show that the access point and the station enter a transition procedure through negotiation. A difference of FIG. 7E from FIG. 7B to FIG. 7D is as follows: In FIG. 7E, the access point directly starts to transmit a data frame when the station is in the first mode, and the station first receives a data frame based on the first mode, and then receives a data frame based on the second mode.

Certainly, the foregoing is merely some embodiments, and actually, this is not limited to the foregoing examples.

It may be understood that, in this embodiment of this application, time at which a transition procedure is entered (start time of a transition procedure) may have a plurality of definitions.

For example, a transition procedure is entered after a negotiation procedure between the station and the access point ends (as shown in FIG. 7A to FIG. 7E). The time may specifically be a moment at which sending or receiving of the fourth radio frame is completed (for example, the station completes sending of the fourth radio frame, the access point receives the fourth radio frame, the access point completes sending of the ACK frame corresponding to the fourth radio frame, or the station receives the ACK frame corresponding to the fourth radio frame), a moment at which sending or receiving of the fifth radio frame is completed (for example, the access point completes sending of the fifth radio frame, the station receives the fifth radio frame, the station completes sending of an ACK frame corresponding to the fifth radio frame, or the access point receives the ACK frame corresponding to the fifth radio frame), or the like.

For example, a transition procedure is entered as soon as the station transitions from the third mode to the first mode (the low power transceiver of the station is woken up and the regular transceiver is turned off).

For example, a transition procedure is entered as soon as the access point sends a 1^{st} radio frame (for example, first radio frame) used to trigger mode transition.

Certainly, the foregoing is merely examples, and this is not specifically limited in this application.

Optionally, the station and the access point may further tear down the transition procedure. Similarly, specifically, the station may unilaterally determine to tear down the transition procedure, the access point may unilaterally determine to tear down the transition procedure, or the access point and the station tear down the transition procedure through negotiation. This is not limited. For example, the station may further send a sixth radio frame to the access point. The sixth radio frame is used to request teardown of the transition procedure from the access point or notify the access point of teardown of the transition procedure. Alternatively, for example, the access point may further send an eighth radio frame to the station. The eighth radio frame indicates that the access point consents to or notifies teardown of the transition procedure.

It may be understood that "teardown" may also be replaced with "end", "stop", "close", or another word. This is not limited. In some examples, the sixth radio frame or the eighth radio frame may be referred to as a teardown (teardown) frame.

In some examples, the sixth radio frame or the eighth radio frame may carry 1 bit, and a value (for example, 0) of the bit indicates a need for or consent to teardown of the transition procedure. For example, a frame format of the sixth radio frame or the eighth radio frame may be a frame format of an action frame shown in Table 1 and Table 2 below. When a value of a Low Power Mode bit of a control field in the action frame is 0, it may indicate a need for or consent to teardown of the transition procedure.

It may be understood that, after teardown of the transition procedure (for example, sending or receiving of the sixth radio frame is completed, or sending or receiving of the eighth radio frame is completed), the access point no longer triggers the station to perform mode transition (for example, no longer sends a first radio frame to trigger the station to perform mode transition), and the station no longer listens for or receives a first radio frame in the first mode or the station is no longer triggered by a first radio frame to perform mode transition. For example, after teardown of the transition procedure, the station returns to the third mode again, that is, turns off the low power transceiver, and the station transmits a signal through only the regular transceiver. If the transition procedure needs to be entered again, the station and the access point may perform negotiation again.

It may be understood that a specific transceiver used to transmit a radio frame inside the station and the specific radio frame are distinguished in all the frame exchange diagrams provided in the foregoing embodiments. In an actual application, the station may be used as a whole, and a specific transceiver used to transmit a radio frame inside the station and the specific radio frame are not distinguished, or a specific transceiver actually used inside the station is invisible to the outside.

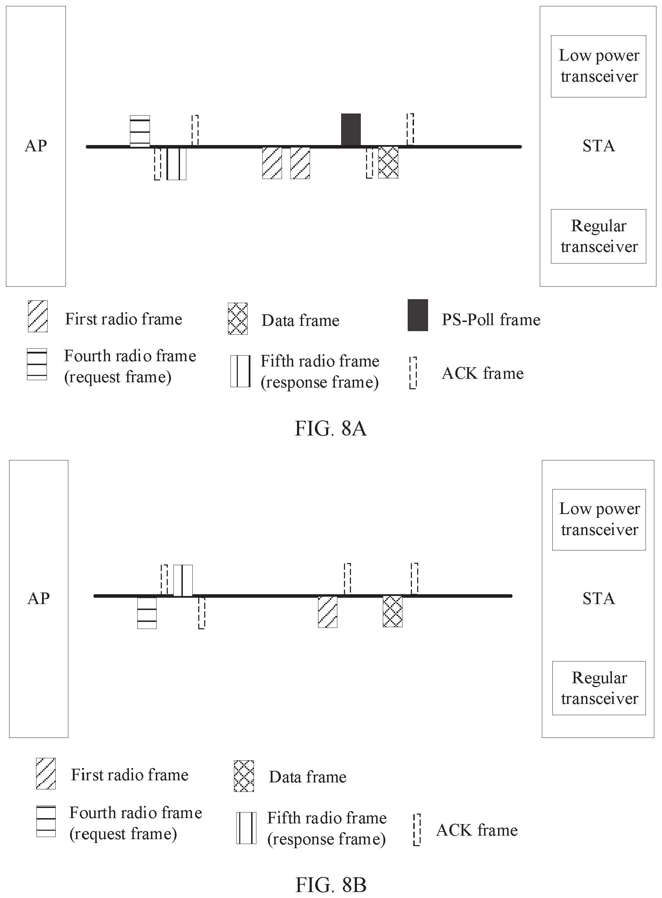

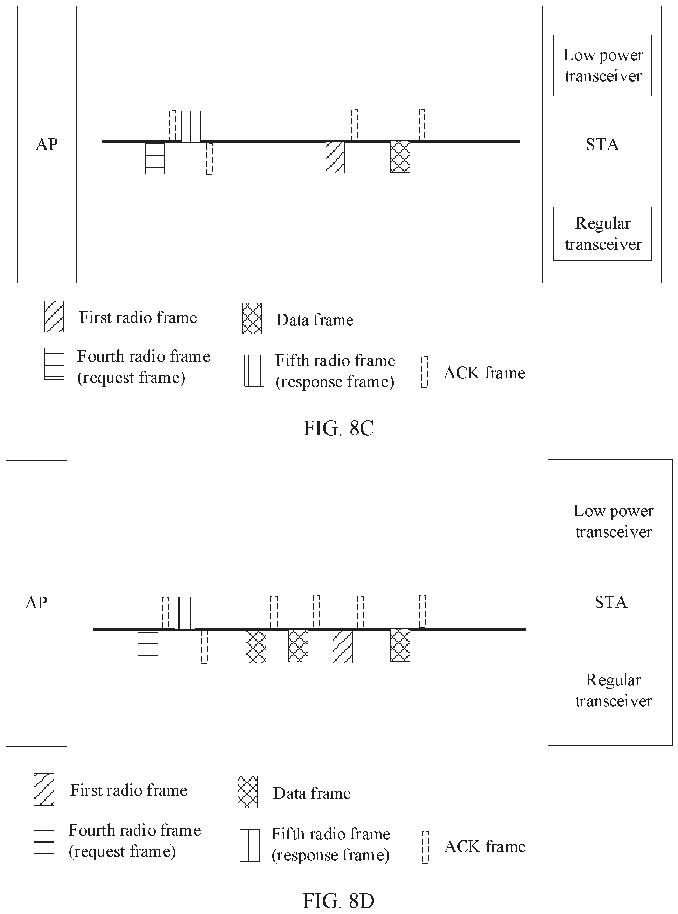

For example, for the frame exchange procedures shown in FIG. 7B to FIG. 7E, frame exchange procedures between the station and the access point that are viewed from a perspective of the outside of the station are respectively shown in FIG. 8A to FIG. 8D (FIG. 8A corresponds to FIG. 7B, FIG. 8B corresponds to FIG. 7C, FIG. 8C corresponds to FIG. 7D, and FIG. 8D corresponds to FIG. 7E). In FIG. 8A to FIG. 8D, a horizontal axis indicates a case in which the whole station performs frame exchange with the access point. A position on the horizontal axis indicates a time order of frame exchange, where a left position indicates an earlier frame and a right position indicates a later frame. Frame sending behavior of the station is identified on an upper side of the axis (a frame on the upper side of the axis is a frame sent by the station), and frame sending behavior of the access point is identified on a lower side of the axis (a frame on the lower side of the axis is a frame sent by the access point).

For example, in FIG. 8A, the access point and the station first perform negotiation by using a fourth radio frame, or a fifth radio frame, or a fourth radio frame and a fifth radio frame, and then enter a transition procedure after the negotiation succeeds. After entry into the transition procedure, the access point needs to first send a first radio frame (there may be one or more first radio frames) to the station before sending a data frame, and the access point sends the data frame to the station after the access point receives a PS-Poll frame returned by the station.

It may be understood that, for other frame exchange procedures, reference can be made to the foregoing descriptions, and no figures and explanations are provided one by one.

The following describes specific implementations of radio frames (such as the fourth radio frame and the fifth radio frame) involved in the foregoing negotiation procedures.

In a possible design, the fourth radio frame includes a field indicating a need for entry into the transition procedure. Correspondingly, the fifth radio frame includes a field indicating consent to entry into the transition procedure.

Further, optionally, the fourth radio frame, the fifth radio frame, or the fourth radio frame and the fifth radio frame may further include a field indicating a frame type. The field may be specifically implemented by using one field, or may be jointly implemented by using a plurality of fields. This is not limited. For example, the field may include two fields: one indicates a frame category (for example, a management frame or a control frame), and the other indicates a frame subcategory.

Further, optionally, the fourth radio frame, the fifth radio frame, or the fourth radio frame and the fifth radio frame may further include at least one of the following fields:
(1) A field indicating the length of the padding field in the first radio frame.

For example, the field may be present in the scenario shown in FIG. 5C or FIG. 5D.

(2) A field indicating time required for the station to transition from the regular transceiver to the low power transceiver.

For example, the field is present in a scenario in which the low power transceiver enters a doze state when the regular transceiver is woken up. For example, the field may be present when the low power transceiver is in a doze state in the second mode.

(3) A field indicating a receiving capability upper limit of the low power transceiver of the station.

In some embodiments, the field may not be carried when the receiving capability upper limit of the low power transceiver is known (as specified in a standard).

(4) A field indicating a receiving capability upper limit of the regular transceiver of the station.

In some embodiments, the field may not be carried when the receiving capability upper limit of the regular transceiver is known (as specified in a standard).

In some embodiments, the field may be further carried in another frame, for example, the first radio frame.

(5) A field indicating whether at least one field is present, where the at least one field is, for example, one or more of the foregoing items (1) to (4).

In some embodiments, frame formats of the fourth radio frame and the fifth radio frame may be the same, and different values of a same field in the frame formats may respectively indicate a need for entry into the transition procedure and consent to entry into the transition procedure.

The following describes the frame format by using an example in which the fourth radio frame is a Request frame, the fifth radio frame is a Response frame, and a frame type is an action frame (action frame). It may be understood that the Request frame or the Response frame may be implemented based on a new defined action frame, or may be implemented by reusing an existing management frame and adding a new element (element) corresponding to the method procedure in this application to the management frame. This is not limited.

For example, Table 1 is an example of a frame format of the action frame.

**Table 1**

| Order (Order) | Information (information) |
|---|---|
| 1 | Category (Category) |
| 2 | Action (Action) |
| 3 | Dialog token (Dialog Token) |
| 4 | Control (Control) |
| 5 | Parameters (Parameters) |

It may be understood that the action frame may actually include some or all of the fields shown in Table 1, and may further include other fields in addition to the fields shown in Table 1. In addition, the field names shown in Table 1 are merely examples, and actually, may also be replaced with other names.
(1) Category field: identifying a frame category of the action frame, for example, a management frame.
(2) Action field: identifying a frame subcategory of the action frame.
   For example, the field identifies whether the frame is a Request frame or a Response frame.
(3) Dialog Token field: a session identifier, identifying a Request frame and a Response frame of a current session in a scenario in which a plurality of sessions are simultaneously performed. For example, frames with a same Dialog Token value belong to a same session.

In some embodiments, a combination of the Category field and the Action field indicates that the action frame is used to enter a transition procedure through negotiation. Optionally, a combination of the Category field and the Action field may further indicate that the action frame is used to tear down the transition procedure through negotiation.

In specific implementation, a new Action value or a combination of [Category value, Action value] may be allocated to the negotiation procedure in this embodiment of this application.

For example, if category code (Category Code) (whose value is 37) of Protected EHT is reused as Category Code of the negotiation procedure in this embodiment of this application, an Action value is an unused value ranging from 0 to 255. For example, if used Action values in Protected EHT Category are 0 to 12, 13 may indicate a Request frame, 14 may indicate a Response frame, and 15 may indicate a Teardown frame. Certainly, this is merely an example, and actually, this is not limited thereto.

For another example, no existing Category code is reused, and a new value is used as Category Code of the negotiation procedure in this embodiment of this application. In this case, an Action value may be any value ranging from 0 to 255. For example, 0 indicates a Request frame, 1 indicates a Response frame, and 2 indicates a teardown frame. Certainly, this is merely an example, and actually, this is not limited thereto.

(4) Control field: The field may carry a bit (for example, a Low Power Mode bit), indicating whether entry into the transition procedure or enabling of the low power mode is needed or consented to.

In some embodiments, if the action frame has no Control field, the access point may not send a Response frame, to indicate that the access point does not consent to entry of the transition procedure.

In some embodiments, alternatively, the Control field may not be present, and the Low Power Mode bit may be carried in another field (for example, the Parameters field).

In some embodiments, the Low Power Mode bit may further indicate a need for, consent to, or a notification of teardown of the transition procedure. For example, Low Power Mode=1 indicates a need for/consent to entry into the transition procedure, and Low Power Mode=0 indicates a need for/consent to/a notification of teardown of the transition procedure. Certainly, this is merely an example, and a specific definition of the value of the field is not limited in this embodiment of this application.

(5) Parameters field: indicating a related parameter used in the transition procedure.

The Parameters field may include one or more subfields. For example, Table 2 is a possible example of subfields of "Parameters".

**Table 2**

| | |
|---|---|
| Parameters | Low power listening mode padding delay (LPL Mode Padding Delay) |
| | Low power listening mode transition delay (LPL Mode Transition Delay) |
| | Low power transceiver capabilities (LP Capabilities) |
| | Regular transceiver capabilities (Regular Capabilities) |

It may be understood that "Parameters" may actually include some or all of the subfields shown in Table 2, and may further include other subfields in addition to the subfields shown in Table 2. In addition, the subfield names shown in Table 2 are merely examples, and actually, may also be replaced with other names.
(1) LPL Mode Padding Delay: indicating the length of the padding field in the first radio frame, and specifically, indicating, for example, a length (for example, the first length or the second length described above) of shortest "padding" that needs to be added to the first radio frame (for example, a Sync frame).
(2) LPL Mode Transition Delay: indicating the time required for the station to transition from the regular transceiver to the low power transceiver (or time required for waking up the low power transceiver).
(3) LP Capabilities: indicating a receiving capability upper limit of the low power transceiver of the station, which may include but is not limited to, for example, one or more pieces of information of a PPDU type, a highest MCS order, a maximum bandwidth, the maximum number of streams, and the like that can be supported by the low power transceiver.
(4) Regular Capabilities: indicating a receiving capability upper limit of the regular transceiver of the station, which may include but is not limited to, for example, one or more pieces of information of a PPDU type, a highest MCS order, a maximum bandwidth, the maximum number of streams, and the like that can be supported by the regular transceiver.

It may be understood that, if the Request frame and the Response frame appear in a form of a management frame that carries a new element, the new element also needs to carry the foregoing fields such as "Low Power Mode", "LPL Mode Padding Delay", "LPL Mode Transition Delay", "LP Capabilities", and "Regular Capabilities".

In some embodiments, both the Request frame and the Response frame carry the LP Capabilities subfield and the LP Capabilities subfield, a value of the LP Capabilities subfield in the Request frame is the same as a value of the LP Capabilities subfield in the Response frame, and a value of the Regular Capabilities subfield in the Request frame is the same as a value of the LP Capabilities subfield in the Regular Capabilities frame. In some other embodiments, the Request frame carries the LP Capabilities subfield and the LP Capabilities subfield, and the Response frame does not carry the LP Capabilities subfield or the LP Capabilities subfield.

In some embodiments, a value of an LPL Mode Padding Delay subfield in the Response frame is the same as a value of an LPL Mode Padding Delay subfield in the Request frame, or a value of an LPL Mode Padding Delay subfield in the Response frame is greater than a value of an LPL Mode Padding Delay subfield in the Request frame. This can ensure that the station has sufficient time to wake up the regular transceiver.

In some embodiments, a value of an LPL Mode Transition Delay subfield in the Response frame is the same as a value of an LPL Mode Transition Delay subfield in the Request frame, or a value of an LPL Mode Transition Delay subfield in the Response frame is greater than a value of an LPL Mode Transition Delay subfield in the Request frame. This can ensure that the station has sufficient time to wake up the low power transceiver.

In some embodiments, the frame format of the action frame may further include one or more of the following fields:
(1) LPL Mode Padding Delay Present: indicating whether the LPL Mode Padding Delay field is present. For example, "LPL Mode Padding Delay Present" has 1 bit. When the bit is 1, it indicates that the LPL Mode Padding Delay field is present; and when the bit is 0, it indicates that the LPL Mode Padding Delay field is not present. Alternatively, when the bit is 1, it indicates that the LPL Mode Padding Delay field is not present; and when the bit is 0, it indicates that the LPL Mode Padding Delay field is present.
(2) LPL Mode Transition Delay Present: indicating whether the LPL Mode Transition Delay field is present. For example, "LPL Mode Transition Delay Present" has 1 bit. When the bit is 1, it indicates that the LPL Mode Transition Delay field is present; and when the bit is 0, it indicates that the LPL Mode Transition Delay field is not present. Alternatively, when the bit is 1, it indicates that the LPL Mode Transition Delay field is not present; and when the bit is 0, it indicates that the LPL Mode Transition Delay field is present.
(3) LP Capabilities Present: indicating whether the LP Capabilities field is present. For example, "LP Capabilities Present" has 1 bit. When the bit is 1, it indicates that the LP Capabilities field is present; and when the bit is 0, it indicates that the LP Capabilities field is not present. Alternatively, when the bit is 1, it indicates that the LP Capabilities field is not present; and when the bit is 0, it indicates that the LP Capabilities field is present.
(4) Regular Capabilities Present: indicating whether the Regular Capabilities field is present. For example, "Regular Capabilities Present" has 1 bit. When the bit is 1, it indicates that the Regular Capabilities field is present; and when the bit is 0, it indicates that the Regular Capabilities field is not present. Alternatively, when the bit is 1, it indicates that the Regular Capabilities field is not present; and when the bit is 0, it indicates that the Regular Capabilities field is present.

Optionally, one or more of the foregoing fields may be implemented by using a bitmap (bitmap), for example, a 4-bit bitmap. 1^{st} to 4^{th} bits respectively indicate whether "LPL Mode Padding Delay", "LPL Mode Transition Delay", "LP Capabilities", and "Regular Capabilities" are present. For example, "0011" indicates that "LP Capabilities" and "Regular Capabilities" are present. For example, "1001" indicates that "LPL Mode Padding Delay" and "Regular Capabilities" are present. Certainly, the foregoing is merely an example, and actually, a manner of indicating whether a field is present is not limited thereto.

It may be understood that the low power transceiver and the regular transceiver in the foregoing embodiments related to FIG. 4A and FIG. 4B, FIG. 5A to FIG. 5F, FIG. 6A to FIG. 6C, FIG. 7A to FIG. 7E, FIG. 8A to FIG. 8D, and the like may be virtual; or there is no division between the low power transceiver and the regular transceiver in the station, but the station may still have the first mode, the second mode, the third mode, and the like described above.

An example in which the station exchanges a data frame with the access point after entering the second mode is used in all the foregoing embodiments related to FIG. 4A and FIG. 4B, FIG. 5A to FIG. 5F, FIG. 6A to FIG. 6C, FIG. 7A to FIG. 7E, and FIG. 8A to FIG. 8D. Actually, the data frame may be alternatively described as a message frame, and the message frame may include one or more of a data frame, a management frame, a control frame, or the like. It may be understood that the implementations in embodiments of this application may be separately implemented, or may be implemented in combination with each other. This is not limited.

The methods provided in embodiments of this application are described above with reference to the accompanying drawings. The following describes apparatuses provided in embodiments of this application with reference to the accompanying drawings.

Based on a same technical concept, an embodiment of this application provides a communication apparatus 900. The apparatus 900 may be, for example, a satellite, a base station, a terminal, an access point, or a chip inside the satellite, the base station, the terminal, or the access point. The apparatus 900 includes corresponding modules, units, or means (means) for performing the method steps in the foregoing method embodiments. The functions, units, or means may be implemented by software, may be implemented by hardware, or may be implemented by hardware executing corresponding software.

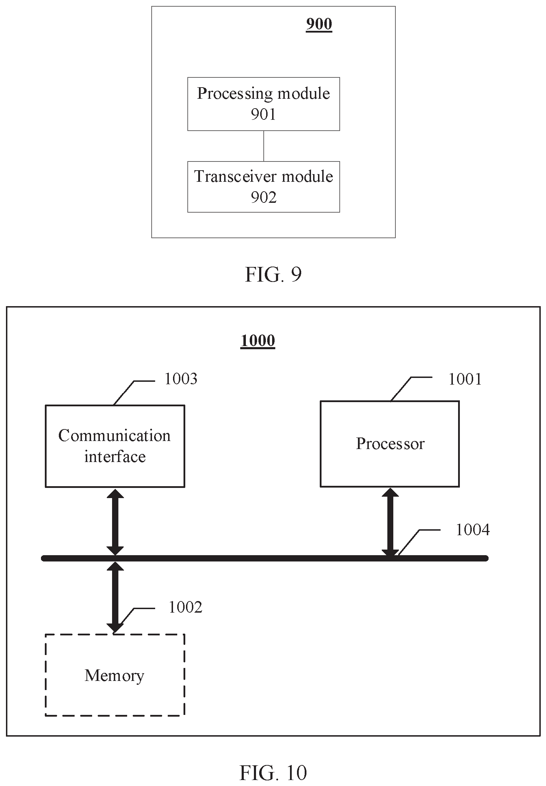

For example, with reference to FIG. 9, the communication apparatus 900 may include a processing module 901 and a transceiver module 902.

In an implementation, the communication apparatus 900 may be a terminal or a communication module in the terminal, and includes:
the transceiver module 902, configured to receive a first radio frame from an access point in a first mode, where the first radio frame is used to trigger a station in which the apparatus is located to transition a mode, and the first radio frame includes identification information of the station; and
the processing module 901, configured to transition from the first mode to a second mode after the transceiver module 902 receives the first radio frame, where
the transceiver module 902 is further configured to receive a message frame from the access point in the second mode, where power consumption of the station in the first mode is lower than power consumption of the station in the second mode; or
the transceiver module 902, configured to receive a first radio frame from an access point through a low power transceiver, where the first radio frame is used to trigger a station in which the apparatus is located to wake up a regular transceiver, and the first radio frame includes identification information of the station; and
the processing module 901, configured to wake up the regular transceiver after the transceiver module 902 receives the first radio frame, where
the transceiver module 902 is further configured to receive a message frame from the access point through the woken-up regular transceiver.

In another implementation, the communication apparatus 900 may be an access point or a communication module in the access point, and includes:
the transceiver module 902, configured to: send a first radio frame to a station, where the first radio frame is used to trigger the station to transition a mode, and the first radio frame includes identification information of the station; and send a message frame to the station; or
the transceiver module 902, configured to: send a first radio frame to a station, where the first radio frame is used to trigger to wake up a regular transceiver, and the first radio frame includes identification information of the station; and send a message frame to the station.

Optionally, the processing module 901 is configured to generate the first radio frame and the message frame.

It should be understood that all related content of the steps in the foregoing method embodiments may be cited in function descriptions of corresponding functional modules. Details are not described herein again.

Based on a same technical concept, referring to FIG. 10, an embodiment of this application further provides a communication apparatus 1000. The communication apparatus 1000 may be a terminal or a circuit or a chip (for example, a modem (Modem) chip, also referred to as a baseband (baseband) chip, or a system on chip (System on Chip, SoC) chip or a system in package (System in Package) SIP chip including a modem core) responsible for a communication function in the terminal. Alternatively, the communication apparatus 1000 may be an access point or a circuit or a chip (for example, a modem (Modem) chip, also referred to as a baseband (baseband) chip, or a system on chip (System on Chip, SoC) chip or a system in package (System in Package) SIP chip including a modem core) responsible for a communication function in the access point. The communication apparatus 1000 may include:
at least one processor 1001; and a communication interface 1003 communicatively connected to the at least one processor 1001, where the at least one processor 1001 executes instructions stored in a memory 1002, to enable the apparatus to perform the method steps in the foregoing method embodiments through the communication interface 1003.

Optionally, the memory 1002 is located outside the apparatus 1000.

Optionally, the apparatus 1000 includes the memory 1002. The memory 1002 is connected to the at least one processor 1001, and the memory 1002 stores the instructions that can be executed by the at least one processor 1001. In FIG. 10, a dashed line indicates that the memory 1002 is optional for the apparatus 1000.

The processor 1001 and the memory 1002 may be coupled through an interface circuit, or may be integrated together. This is not limited herein.

A specific connection medium between the processor 1001, the memory 1002, and the communication interface 1003 is not limited in this embodiment of this application. In this embodiment of this application, the processor 1001, the memory 1002, and the communication interface 1003 are connected through a bus 1004 in FIG. 10. The bus is represented by a bold line in FIG. 10. The connection manner between other components is merely an example for description, and is not limited thereto. The bus may be classified as an address bus, a data bus, a control bus, or the like. For ease of representation, only one bold line represents the bus in FIG. 10, but this does not mean that there is only one bus or only one type of bus.

A specific connection medium between the processor 1001, the memory 1002, and the communication interface 1003 is not limited in this embodiment of this application. In this embodiment of this application, the processor 1001, the memory 1002, and the communication interface 1003 are connected through a bus 1004 in FIG. 10. The bus is represented by a bold line in FIG. 10. The connection manner between other components is merely an example for description, and is not limited thereto. The bus may be classified as an address bus, a data bus, a control bus, or the like. For ease of representation, only one bold line represents the bus in FIG. 10, but this does not mean that there is only one bus or only one type of bus.

It should be understood that the processor mentioned in this embodiment of this application may be implemented by hardware or software. When the processor is implemented by hardware, the processor may be a logic circuit, an integrated circuit, or the like. When the processor is implemented by software, the processor may be a general-purpose processor, and is implemented by reading software code stored in the memory.

For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or transistor logic device, a discrete hardware component, or the like. The general-purpose processor may be a microprocessor, or the processor may be any conventional processor or the like.

It should be understood that the memory mentioned in this embodiment of this application may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example and not limitation, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate or transistor logic device, or a discrete hardware component, the memory (storage module) may be integrated into the processor.

It should be noted that the memory described in this specification aims to include but is not limited to these memories and any memory of another proper type.

Based on a same technical concept, an embodiment of this application further provides a computer-readable storage medium, including a program or instructions. When the program is or the instructions are run on a computer, the method in the foregoing method embodiments is performed.

Based on a same technical concept, an embodiment of this application further provides a computer program product, including instructions. When the instructions are run on a computer, the method in the foregoing method embodiments is performed.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, a CD-ROM, an optical memory, and the like) that include computer-usable program code.

This application is described with reference to the flowcharts and/or the block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more procedures in the flowcharts and/or in one or more blocks in the block diagrams.

These computer program instructions may be alternatively stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may be alternatively loaded onto a computer or another programmable data processing device, so that a series of operations and steps are performed on the computer or another programmable device, so that computer-implemented processing is generated. Therefore, the instructions executed on the computer or another programmable device provide steps for implementing a specific function in one or more procedures in the flowcharts and/or in one or more blocks in the block diagrams.

## Claims

1. A communication method, comprising:
receiving, by a station, a first radio frame from an access point in a first mode, wherein the first radio frame is used to trigger the station to transition a mode, and the first radio frame comprises identification information of the station;
transitioning, by the station, from the first mode to the second mode after receiving the first radio frame; and
receiving, by the station, a message frame from the access point in the second mode, wherein
power consumption of the station in the first mode is lower than power consumption of the station in the second mode.

2. The method according to claim 1, wherein
the first mode is that the station transmits a signal through a low power transceiver; and
the second mode is that the station transmits a signal through a regular transceiver.

3. The method according to claim 1 or 2, wherein the first radio frame meets one or more of the following:
a bandwidth corresponding to the first radio frame is less than a first threshold;
a modulation and coding scheme MCS order corresponding to the first radio frame is less than a second threshold; and
a number of streams corresponding to the first radio frame is less than a third threshold.

4. The method according to claim 3, wherein the first radio frame further meets one or more of the following:
a frame type of the first radio frame is a first type; and
a format of a physical-layer protocol data unit PPDU in which the first radio frame is located is a first format.

5. The method according to claim 3 or 4, wherein the first radio frame is a predefined frame.

6. The method according to any one of claims 1 to 5, wherein the method further comprises:
sending, by the station, a second radio frame to the access point in the second mode, wherein the second radio frame is used to notify the access point that the station has transitioned to the second mode or that the station is ready to receive a data frame from the access point.

7. The method according to claim 6, wherein the second radio frame is a power-saving poll PS-Poll frame.

8. The method according to claim 6, wherein the second radio frame is an acknowledgment ACK frame corresponding to the first radio frame.

9. The method according to claim 8, wherein a length of a padding field in the first radio frame reaches or exceeds a first length.

10. The method according to any one of claims 1 to 5, wherein the method further comprises:
sending, by the station, a third radio frame to the access point in the first mode, wherein the third radio frame is used to notify the access point that the station has transitioned to the second mode or that the station is ready to receive a message frame from the access point.

11. The method according to claim 10, wherein a length of a padding field in the first radio frame reaches or exceeds a second length.

12. The method according to any one of claims 1 to 4, wherein the first radio frame comprises first indication information, and the first indication information indicates the station to transition a mode.

13. The method according to claim 12, wherein the first radio frame is a message frame.

14. The method according to any one of claims 1 to 13, wherein before the receiving, by the station, the first radio frame from the access point in the first mode, the method further comprises:
receiving, by the station, at least one message frame from the access point in the first mode, wherein
each of the at least one message frame meets one or more of the following conditions:
a bandwidth corresponding to each message frame is less than 20 MHz;
a format of a PPDU in which each message frame is located is a non-high throughput Non-HT PPDU;
an MCS order corresponding to each message frame is less than a threshold; and
the number of streams corresponding to each message frame is a single stream.

15. The method according to any one of claims 1 to 14, wherein before the receiving, by the station, the first radio frame from the access point in the first mode, the method further comprises:
sending, by the station, a fourth radio frame to the access point in a third mode, wherein the fourth radio frame is used to request entry into a transition procedure from the access point or notify the access point of entry into a transition procedure, and the transition procedure comprises transitioning from the first mode to the second mode or transitioning from the second mode to the first mode, wherein
the third mode is that the station can transmit a signal through only the regular transceiver.

16. The method according to claim 15, wherein the method further comprises:
receiving, by the station, a fifth radio frame from the access point in the third mode, wherein the fifth radio frame is used to notify the station that the access point consents to entry into the transition mode or that the access point receives the fourth radio frame.

17. The method according to claim 15 or 16, wherein the fifth radio frame comprises at least one of the following fields:
a field indicating a need for entry into the transition procedure;
a field indicating the length of the padding field in the first radio frame;
a field indicating time required for the station to transition from the regular transceiver to the low power transceiver;
a field indicating a receiving capability upper limit of the low power transceiver of the station; and
a field indicating a receiving capability upper limit of the regular transceiver of the station.

18. The method according to claim 16, wherein the sixth radio frame comprises at least one of the following fields:
a field indicating consent to entry into the transition procedure;
a field indicating the length of the padding field in the first radio frame;
a field indicating the time required for the station to transition from the regular transceiver to the low power transceiver;
a field indicating the receiving capability upper limit of the low power transceiver of the station; and
a field indicating the receiving capability upper limit of the regular transceiver of the station.

19. The method according to any one of claims 15 to 18, further comprising:
sending, by the station, a sixth radio frame to the access point, wherein the sixth radio frame is used to request teardown of the transition procedure from the access point or notify the access point of teardown of the transition procedure.

20. A communication method, comprising:
sending, by an access point, a first radio frame to a station, wherein the first radio frame is used to trigger the station to transition a mode, and the first radio frame comprises identification information of the station; and
sending, by the access point, a message frame to the station.

21. The method according to claim 20, wherein the transitioning a mode comprises transitioning from a first mode to a second mode or transitioning from the second mode to the first mode;
the first mode is that the station transmits a signal through a low power transceiver; and
the second mode is that the station transmits a signal through a regular transceiver.

22. The method according to claim 20 or 21, wherein the first radio frame meets one or more of the following:
a bandwidth corresponding to the first radio frame is less than a first threshold;
a modulation and coding scheme MCS order corresponding to the first radio frame is less than a second threshold; and
a number of streams corresponding to the first radio frame is less than a third threshold.

23. The method according to claim 22, wherein the first radio frame further meets one or more of the following:
a frame type of the first radio frame is a first type; and
a format of a PPDU in which the first radio frame is located is a first format.

24. The method according to claim 22 or 23, wherein
the first radio frame is a predefined frame.

25. The method according to any one of claims 20 to 24, wherein the method further comprises:
receiving, by the access point, a second radio frame from the station; and
determining, by the access point based on the second radio frame, that the station has transitioned to the second mode or to send a message frame to the station.

26. The method according to claim 25, wherein the second radio frame is a power-saving poll PS-Poll frame.

27. The method according to claim 26, wherein the sending, by the access point, the first radio frame to the station comprises:
sending, by the access point, one or more first radio frames to the station.

28. The method according to claim 25, wherein the second radio frame is an acknowledgment ACK frame corresponding to the first radio frame.

29. The method according to claim 28, wherein a length of a padding field in the first radio frame reaches or exceeds a first length.

30. The method according to any one of claims 20 to 24, wherein the method further comprises:
receiving, by the access point, a third radio frame from the station; and
determining, by the access point based on the third radio frame, that the station has transitioned to the second mode or to send a message frame to the station.

31. The method according to claim 30, wherein a length of a padding field in the first radio frame reaches or exceeds a second length.

32. The method according to any one of claims 20 to 23, wherein the first radio frame comprises first indication information, and the first indication information indicates the station to transition a mode.

33. The method according to claim 32, wherein the first radio frame is a message frame.

34. The method according to any one of claims 20 to 33, wherein before the sending, by the access point, the first radio frame to the station, the method further comprises:
sending, by the access point, at least one message frame to the station, wherein
each of the at least one message frame meets one or more of the following conditions:
a bandwidth corresponding to each message frame is less than 20 MHz;
a format of a PPDU in which each message frame is located is a non-high throughput Non-HT PPDU;
an MCS order corresponding to each message frame is less than a threshold; and
the number of streams corresponding to each message frame is a single stream.

35. The method according to any one of claims 20 to 34, wherein before the sending, by the access point, the first radio frame to the station, the method further comprises:
receiving, by the access point, a fourth radio frame from the station, wherein the fourth radio frame is used to request entry into a transition procedure from the access point or notify the access point of entry into a transition procedure, and the transition procedure comprises transitioning from the first mode to the second mode or transitioning from the second mode to the first mode.

36. The method according to claim 35, wherein the method further comprises:
sending, by the access point, a fifth radio frame to the station, wherein the fifth radio frame is used to notify the station that the access point consents to entry into the transition mode or that the access point receives the fourth radio frame.

37. The method according to claim 35 or 36, wherein the fourth radio frame comprises at least one of the following fields:
a field indicating a need for entry into the transition procedure;
a field indicating the length of the padding field in the first radio frame;
a field indicating time required for the station to transition from the regular transceiver to the low power transceiver;
a field indicating a receiving capability upper limit of the low power transceiver of the station; and
a field indicating a receiving capability upper limit of the regular transceiver of the station.

38. The method according to claim 36, wherein the fifth radio frame comprises at least one of the following fields:
a field indicating consent to entry into the transition procedure;
a field indicating the length of the padding field in the first radio frame;
a field indicating the time required for the station to transition from the regular transceiver to the low power transceiver;
a field indicating the receiving capability upper limit of the low power transceiver of the station; and
a field indicating the receiving capability upper limit of the regular transceiver of the station.

39. The method according to any one of claims 35 to 38, further comprising:
receiving, by the access point, a sixth radio frame sent by the station, wherein the sixth radio frame is used to request teardown of the transition procedure from the access point or notify the access point of teardown of the transition procedure.

40. A communication apparatus, comprising a module configured to perform the method according to any one of claims 1 to 19, or comprising a module configured to perform the method according to any one of claims 20 to 39.

41. A communication apparatus, comprising a processor and an interface circuit, wherein the interface circuit is electrically coupled to the processor, and the processor performs the method according to any one of claims 1 to 19 or the method according to any one of claims 20 to 39 by using a logic circuit or by executing code instructions.

42. A computer-readable storage medium, wherein the storage medium stores a computer program or instructions, and when the computer program is or the instructions are run, the method according to any one of claims 1 to 19 or the method according to any one of claims 20 to 39 is performed.

43. A communication system, comprising:
a station, configured to perform the method according to any one of claims 1 to 19; and
an access point, configured to perform the method according to any one of claims 20 to 39.

44. A computer program product, comprising instructions, wherein when the instructions are run on a computer, the method according to any one of claims 1 to 19 or the method according to any one of claims 20 to 39 is performed.
